(19) Europäisches Patentamt
European Patent Office
Office européen des brevets

(11) **EP 2 704 097 A2**

(12) **EUROPEAN PATENT APPLICATION**

(43) Date of publication:
**05.03.2014 Bulletin 2014/10**

(51) Int Cl.:
***G06T 7/00*** *(2006.01)*

(21) Application number: **13020075.1**

(22) Date of filing: **02.08.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **29.08.2012 JP 2012189178**<br>**29.03.2013 JP 2013071993**<br><br>(71) Applicant: **JVC KENWOOD Corporation**<br>**Yokohama-shi**<br>**Kanagawa 221-0022 (JP)** | (72) Inventor: **Takeshita, Hiroshi**<br>**Yokohama-shi, Kanagawa, 221-0022 (JP)**<br><br>(74) Representative: **Wagner & Geyer**<br>**Partnerschaft**<br>**Patent- und Rechtsanwälte**<br>**Gewürzmühlstrasse 5**<br>**80538 München (DE)**<br><br>Remarks:<br>A request for correction of the pages 7 and 39 of the description has been filed pursuant to Rule 139 EPC. A decision on the request will be taken during the proceedings before the Examining Division (Guidelines for Examination in the EPO, A-V, 3.). |

(54) **Depth estimation device, depth estimation method, depth estimation program, image processing device, image processing method, and image processing program**

(57)    An outline identification unit (81) identifies an outline of an object in a target image. A distance identification unit (82) identifies the minimum distance between a target pixel in an object region and the outline. A depth value determination unit (83) configured to determine a depth value of the target pixel in accordance with the distance. The distance identification unit (82) can determine the minimum distance to the outline by spirally searching for a point of contact with the outline starting at the position of the target pixel.

FIG.15

EP 2 704 097 A2

**Description**

BACKGROUND

The present invention relates to a depth estimation device, a depth estimation method, a depth estimation program, an image processing device, an image processing method, and an image processing program for estimating the depth of an object in an image.

In recent years, 3D video content items such as 3D movies or 3D broadcasting have been widespread. In order to allow an observer to perform stereoscopic vision, a right eye image and a left eye image with parallax are required. When a 3D video is displayed, a right eye image and a left eye image are displayed in a time-division manner, and the right eye image and the left eye image are separated using glasses for video separation such as shutter glasses or polarization glasses. Thereby, an observer can perform stereoscopic vision by observing the right eye image only with the right eye and the left eye image only with the left eye. In addition, if a right eye image and a left eye image are not temporally divided but spatially divided, glasses are not necessary but a resolution is reduced. In any of the glasses method and the glassless method, a right eye image and a left eye image are commonly necessary.

There are largely two methods of producing 3D images, that is, one is a method of simultaneously capturing a right eye image and a left eye image using two cameras, and the other is a method of generating a parallax image by editing a 2D image captured by a single camera afterward. The present invention relates to the latter and relates to a 2D-3D conversion technique.

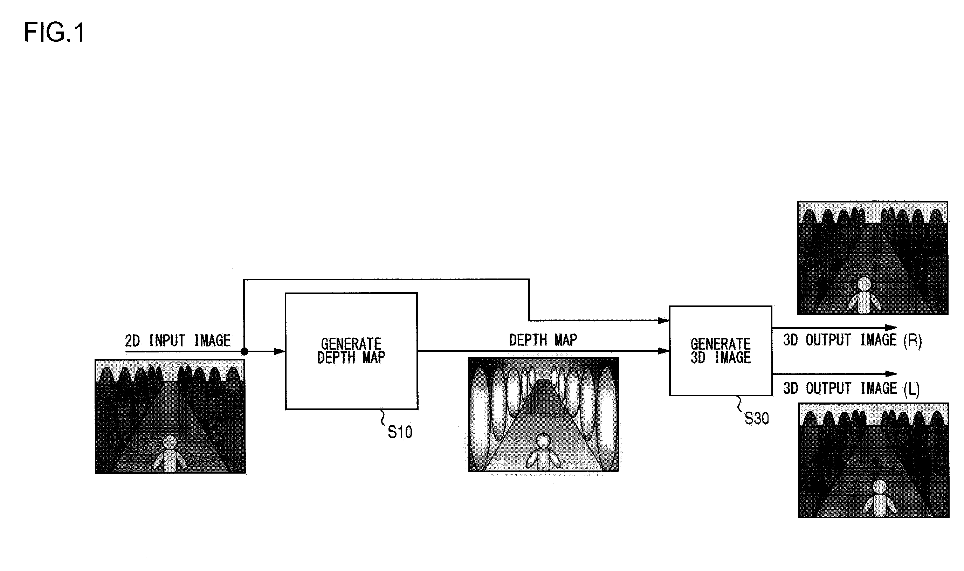

Fig. 1 is a diagram illustrating a basic process procedure of 2D-3D conversion. First, a depth map (also referred to as depth information) is generated from a 2D input image (step S10). In addition, 3D images are generated using the 2D input image and the depth map (step S30). In Fig. 1, the 2D input image is set as a right eye image of the 3D output images, and an image obtained by shifting pixels of the 2D input image using the depth map is set as a left eye image of the 3D output images. Hereinafter, a set of a right eye image and a left eye image with predetermined parallax is referred to as 3D images or parallax images.

Various methods for estimating a scene structure represented in a 2D image so as to generate a depth map are proposed in the related art. We have proposed a method of calculating statistics of pixel values in a certain area within an image so as to estimate the scene structure, determining the ratio of combining a plurality of basic depth models accordingly, and generating a depth map in accordance with the ratio of combination. Using this method, it is possible to easily and quickly generate a less uncomfortable 3D image from a 2D image.

[patent document 1] JP2009-44722

In order to generate a high-quality 3D image, it is necessary to generate a high-quality depth map. For generation of a high-quality depth map, it is desirable to optimize the form of the depth for each object in an image. In order to provide a 2D image with a high-quality gradation, it is also desirable to allow for the form of the depth of an object in an image and to provide a gradation adapted to the form.

However, it is a hassle for the user to estimate or adjust the form of the depth in each object.

SUMMARY

The present invention addresses the problem and a purpose thereof is to provide a technology of estimating the shape of the depth of an object in an image easily and precisely.

In order to address the challenge described above, the depth estimation device according to an embodiment of the present invention comprises: an outline identification unit configured to identify an outline of an object in a target image; a distance identification unit configured to identify a distance between a target pixel in an object region and the outline; and a depth value determination unit configured to determine a depth value of the target pixel in accordance with the distance.

Another embodiment of the present invention relates to a depth estimation method. The method comprises: identifying an outline of an object in a target image; identifying a distance between a target pixel in an object region and the outline; and determining a depth value of the target pixel in accordance with the distance.

Another embodiment of the present invention relates to an image processing device. The device comprises: a depth map generation unit configured to refer to an input image and a depth model so as to generate a depth map of the input image; a volume emboss generation unit configured to generate an emboss pattern of an object in the input image; a depth map processing unit configured to process a region located in the depth map generated by the depth map generation unit and corresponding to the object; and an image generation unit configured to generate an image characterized by a different viewpoint, based on the input image and the depth map processed by the depth map processing unit. The volume emboss generation unit comprises: an outline identification unit configured to identify an outline of the object; a distance identification unit configured to identify a distance between a target pixel in the object and the outline; and a depth value determination unit configured to determine a depth value of the target pixel in accordance with the distance. The volume emboss generation unit generates the emboss pattern based on the depth value determined by the depth value determination unit, and the depth map processing unit adds an emboss to the region in the depth map corresponding to the object, by using the emboss pattern.

Another embodiment of the present invention relates to an image processing method. The method comprises: referring to an input image and a depth model so as to generate a depth map of the input image; generating an emboss pattern of an object in the input image; processing a region located in the generated depth map and corresponding to the object; and generating an image characterized by a different viewpoint, based on the input image and the processed depth map. The generation of an emboss pattern comprises: identifying an outline of the object; identifying a distance between a target pixel in the object and the outline; and determining a depth value of the target pixel in accordance with the distance. The generation of an emboss pattern generates the emboss pattern based on the depth value as determined, and the processing of the depth map comprises adding an emboss to the region in the depth map corresponding to the object, by using the emboss pattern.

Optional combinations of the aforementioned constituting elements, and implementations of the invention in the form of methods, apparatuses, systems, recording mediums, and computer programs may also be practiced as additional modes of the present invention.

Embodiments will now be described, by way of example only, with reference to the accompanying drawings which are meant to be exemplary, not limiting, and wherein like elements are numbered alike in several Figures, in which:

Fig. 1 is a diagram illustrating a basic process procedure of 2D-3D conversion;

Fig. 2 is a diagram illustrating a configuration of an image editing system according to the first embodiment of the present invention;

Fig. 3 is a diagram illustrating a configuration example of the depth map generation unit according to the first embodiment of the present invention;

Fig. 4 is a diagram illustrating overall process procedures of the image editing system according to the first embodiment of the present invention;

Fig. 5 is a diagram illustrating a gain adjusting procedure of an input depth map;

Fig. 6 is a diagram illustrating a combining process procedure of layer depth maps;

Fig. 7 is a diagram illustrating a gain adjusting procedure of an input depth map in which a mask is not used;

Fig. 8 shows the process of generating a 3D image by the 3D image generation unit;

Fig. 9 is a diagram illustrating an offset adjusting procedure of the input depth map;

Fig. 10 is a diagram illustrating an offset adjustment procedure of an input depth map in which a mask is not used;

Figs. 11A-11C show adjustment of the dynamic range in an entire depth map;

Fig. 12 illustrates the process of providing a gradation to an input depth map;

Fig. 13 illustrates the process of providing a gradation to an input depth map without using a mask;

Fig. 14 shows the structure of the image editing system according to the second embodiment;

Fig. 15 shows the structure of the volume emboss generation unit according to the second embodiment;

Figs. 16A-16C show a method of generating a depth map of an object according to the second embodiment;

Figs. 17A-17C illustrate the process of searching for the minimum distance between a target pixel in an object region and the mask edge;

Fig. 18 shows variation of the luminance of a volume emboss;

Figs. 19A-19C illustrate level conversion of a volume emboss;

Figs. 20A-20B show an exemplary volume emboss for a complicated object form;

Figs. 21A-21B show an emboss pattern for a person facing front;

Figs. 22A-22B show an emboss pattern for a person facing to the side;

Figs. 23A-23C show an emboss pattern for a bottle;

Fig. 24 is a diagram illustrating a configuration of the volume emboss generation unit according to the third embodiment;

Fig. 25 shows how a non-eccentric search circle (true circle) is used to search for an edge pixel of an object;

Fig. 26 shows an emboss pattern from Fig. 25;

Figs. 27A-27B show how an eccentric search circle (true circle) is used to search for an edge pixel of an object;

Fig. 28 shows how an eccentric search circle (true circle) is used to search for an edge pixel of an object;

Fig. 29 shows an emboss pattern from Fig. 28;

Fig. 30 shows how an eccentric search circle (true circle) with larger eccentricity than that of Fig. 28 is used to search for an edge pixel of an object;

Fig. 31 shows an emboss pattern from Fig. 30;

Figs. 32 shows how a search circle (true circle) eccentric toward bottom left is used to search for an edge pixel of an object;

Fig. 33 shows an emboss pattern from Fig. 32;

Fig. 34 shows a method of producing a search circle;

Fig. 35 shows a method of producing an eccentric search circle;

Fig. 36 shows how a true search circle is used to search for an edge pixel of an object;

Fig. 37 shows an emboss pattern from Fig. 36;

Fig. 38 shows how an elliptical search circle is used to search for an edge pixel of an object;

Fig. 39 shows an emboss pattern from Fig. 38;

Fig. 40 shows how a search circle with a larger ovalization factor than that of Fig. 38 is used to search for an edge pixel of an object;

Fig. 41 shows an emboss pattern from Fig. 40;

Fig. 42 shows a method of producing an elliptical search circle;

Fig. 43 shows search for an edge pixel of an object having a shape of a tilted bottle;

Fig. 44 shows an emboss pattern from Fig. 43;

Fig. 45 shows a method of generating an elliptical search circle having a tilted axis;

Figs. 46A-46B show how an edge pixel of an object is searched for by using a true search circle;

Figs. 47A-47B show an emboss pattern from Figs. 46A-46B; and

Figs. 48A-48D show how an edge pixel of an object having a shape of a tilted bottle is searched for.

## DETAILED DESCRIPTION

The invention will now be described by reference to the preferred embodiments. This does not intend to limit the scope of the present invention, but to exemplify the invention.

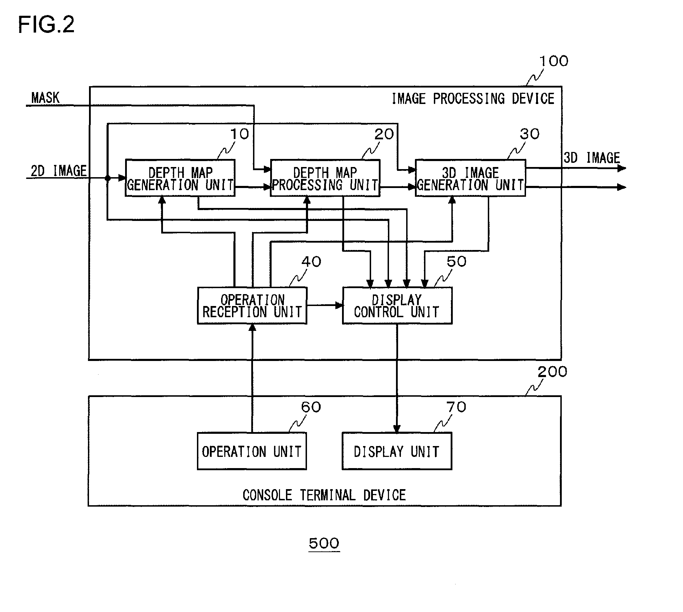

Fig. 2 is a diagram illustrating a configuration of an image editing system 500 according to a basic embodiment of the present invention. The image editing system 500 according to the present embodiment includes an image process device 100 and a console terminal device 200.

The console terminal device 200 is a terminal device used for an image producer (hereinafter referred to as a user) to produce and edit an image. The console terminal device 200 includes an operation unit 60 and a display unit 70. The operation unit 60 is an input device such as a keyboard or a mouse, and the display unit 70 is an output device such as a display. In addition, a touch panel display in which input and output are integrated may be used. Further, the console terminal device 200 may include a user interface such as a printer or a scanner which uses a printed matter as a medium. The operation unit 60 receives a user operation, generates a signal caused by the user operation, and outputs the signal to the image process device 100. The display unit 70 displays an image generated by the image process device 100.

The image process device 100 includes a depth map generation unit 10, a depth map processing unit 20, a 3D image generation unit 30, an operation reception unit 40, and a display control unit 50. This configuration can be implemented by any processor, memory, and other LSI in terms of hardware, and be implemented by a program or the like loaded to a memory in terms of software, and, here, a functional block realized by a combination thereof is drawn. Therefore, this functional block which can be realized by only hardware, only software, or a combination thereof can be understood by a person skilled in the art. For example, in relation to the depth map generation unit 10, the depth map processing unit 20, and the 3D image generation unit 30, overall functions thereof may be realized by software, and, functions of the depth map generation unit 10 and the 3D image generation unit 30 may be configured by a dedicated logic circuit, and a function of the depth map processing unit 20 may be realized by software.

The depth map generation unit 10 generates a depth map of a 2D image on the basis of the input 2D image and a depth model. The depth map is a grayscale image which indicates a depth value by a luminance value. The depth map generation unit 10 estimates the scene structure and generates a depth map by using a depth model suitable for the scene structure. In the present embodiment, the depth map generation unit 10 combines a plurality of basic depth models so as to be used to generate a depth map. At this time, a combining ratio of a plurality of basic depth models is varied depending on the scene structure of the 2D image.

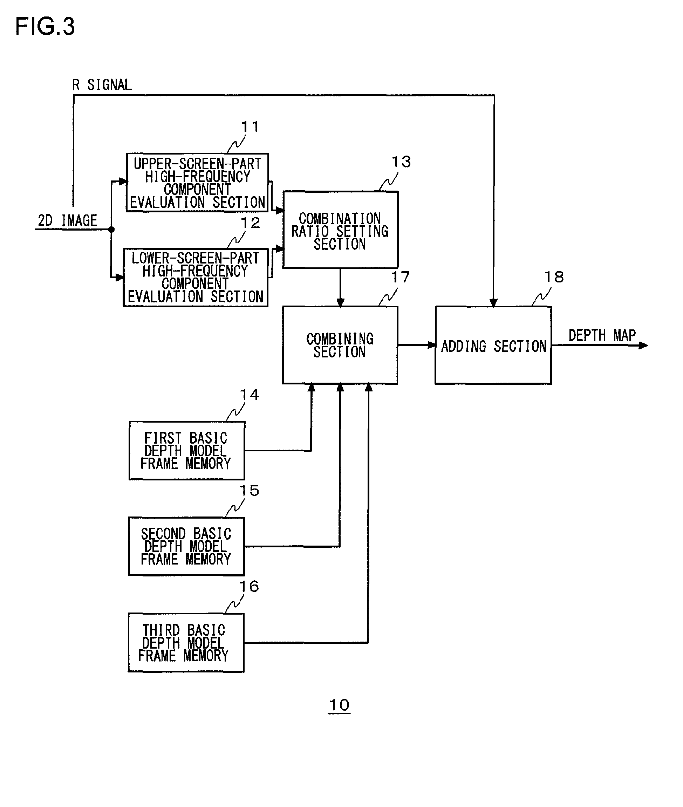

Fig. 3 is a diagram illustrating a configuration example of the depth map generation unit 10 according to the first embodiment of the present invention. The depth map generation unit 10 includes an upper-screen-part high-frequency component evaluation section 11, a lower-screen-part high-frequency component evaluation section 12, a combining ratio setting section 13, a first basic depth model frame memory 14, a second basic depth model frame memory 15, a third depth model frame memory 16, a combining section 17, and an adding section 18.

The upper-screen-part high-frequency component evaluation section 11 calculates a ratio of pixels having a high frequency component in an upper screen part of a 2D image to be processed. The ratio is set as a high frequency component evaluation value of the upper screen part. In addition, a ratio of the upper screen part to the entire screen may be set to approximately 20%. The lower-screen-part high-frequency component evaluation section 12 calculates a ratio of pixels having a high frequency component in a lower screen part of the 2D image. The ratio is set as a high frequency component evaluation value of the lower screen part. In addition, a ratio of the lower screen part to the entire screen may be set to approximately 20%.

The first basic depth model frame memory 14 holds a first basic depth model, the second basic depth model frame memory 15 holds a second basic depth model, and the third basic depth model frame memory 16 holds a third basic depth model. The first basic depth model is a model with a spherical surface in which the upper screen part and the lower screen part are in a concave state. The second basic depth model is a model with a cylindrical surface in which the upper screen part has an axial line in the longitudinal direction, and with a spherical surface in which the lower screen part is in a concave state. The third basic depth model is a model with a plane on the upper screen part and with a cylindrical surface in which the lower screen part has an axial line in the transverse direction.

The combining ratio setting section 13 sets combining ratios k1, k2 and k3 (where k1 + k2 + k3 = 1) of the first basic depth model, the second basic depth model, and the third basic depth model, based on the high frequency component evaluation values of the upper screen part and the lower screen part which are respectively calculated by the upper-screen-part high-frequency component evaluation section 11 and the lower-screen-part high-frequency component evaluation section 12. The combining section 17 multiplies the combining ratios k1, k2 and k3 by the first basic depth model, the second basic depth model, and the third basic depth model, respectively, and adds the respective multiplication results to each other. This calculation result is a combined basic depth model.

For example, in a case where the high frequency component evaluation value of the upper screen part is small, the combining ratio setting section 13 recognizes a scene in which the sky or a flat wall is present in the upper screen part, and increases a ratio of the second basic depth model so as to increase the depth of the upper screen part. In addition, in a case where the high frequency component evaluation value of the lower screen part is small, a scene in which a flat ground or a water surface continuously extends in front in the lower screen part is recognized, and a ratio of the third basic depth model is increased. In the third basic depth model, the upper screen part is approximated to a plane as a distant view, and the lower screen part is gradually decreased in a depth toward the lower part.

The adding section 18 superimposes a red component (R) signal of the 2D image on the combined basic depth model generated by the combining section 17. The use of the R signal is based on the experimental rule that there is a high possibility that the magnitude of the R signal may conform to unevenness of a subject in circumstances in which the magnitude of the R signal is close to that of pure light and in a condition in which the brightness of a texture is not greatly different. In addition, the reason for red and warm color usages is that those colors are advancing colors and are recognized as being further in front than cool colors, and thereby a stereoscopic effect is emphasized.

The description will be continued with reference to Fig. 2. The depth map processing unit 20 processes the depth map generated by the depth map generation unit 10. In the present embodiment, the depth map processing unit 20 individually or independently processes depth maps generated by the depth map generation unit 10 for a plurality of respective regions designated by a plurality of externally set mask patterns (hereinafter simply referred to as masks). For example, processing such as a gain adjusting process, an offset adjusting process, and a gradation process is performed. A process by the depth map processing unit 20 will be described in detail later.

The 3D image generation unit 30 generates a 2D image of a different viewpoint based on the above-described 2D image and the depth maps processed by the depth map processing unit 20. The 3D image generation unit 30 outputs the 2D image of an original viewpoint and the 2D image of a different viewpoint as a right eye image and a left eye image.

Hereinafter, a description will be made of a detailed example in which a 2D image of a different viewpoint having parallax with a 2D image of an original viewpoint is generated using the 2D image and depth maps. In this detailed example, the 2D image of the different viewpoint of which a viewpoint is shifted to the left is generated when using a viewpoint in displaying the 2D image of the original viewpoint on a screen as a reference. In this case, when a texture is displayed as a near view with respect to an observer, a texture of the 2D image of the original viewpoint is moved to the left side of the screen by a predetermined amount, and, when the texture is displayed as a distant view with respect to the observer, the texture is moved to the right side of the screen by a predetermined amount.

A luminance value of each pixel of a depth map is set to Yd, a congestion value indicating the sense of protrusion is set to m, and a depth value indicating the stereoscopic effect is set to n. The 3D image generation unit 30 shifts a texture of the 2D image of the original viewpoint corresponding to a luminance value Yd to the left in order from a small value of the luminance value Yd for each pixel by a (Yd - m)/n pixel. In a case where a value of (Yd - m)/n is negative, the texture is shifted to the right by a (m - Yd)/n pixel. In addition, to the observer, a texture having a small luminance value Yd of the depth map is observed inside the screen, and a texture having a large luminance value Yd is observed in front of the screen. The luminance value Yd, the congestion value m, and the depth value n are values ranging from 0 to 255, and, for example, the congestion value m is set to 200, and the depth value n is set to 20.

In addition, more detailed description of generation of a depth map by the depth map generation unit 10 and generation of 3D images by the 3D image generation unit 30 is disclosed in JP-A Nos. 2005-151534 and 2009-44722 which were filed previously by the present applicant.

The operation reception unit 40 receives a signal input from the operation unit 60 of the console terminal device 200. The operation reception unit 40 outputs a control signal to the depth map generation unit 10, the depth map processing unit 20, the 3D image generation unit 30, or the display control unit 50, depending on the received signal.

The display control unit 50 controls the display unit 70 of the console terminal device 200. The display control unit 50 can display any of 2D input images, depth maps generated by the depth map generation unit 10, depth maps processed by the depth map processing unit 20, and 3D images generated by the 3D image generation unit 30 on the display unit 70.

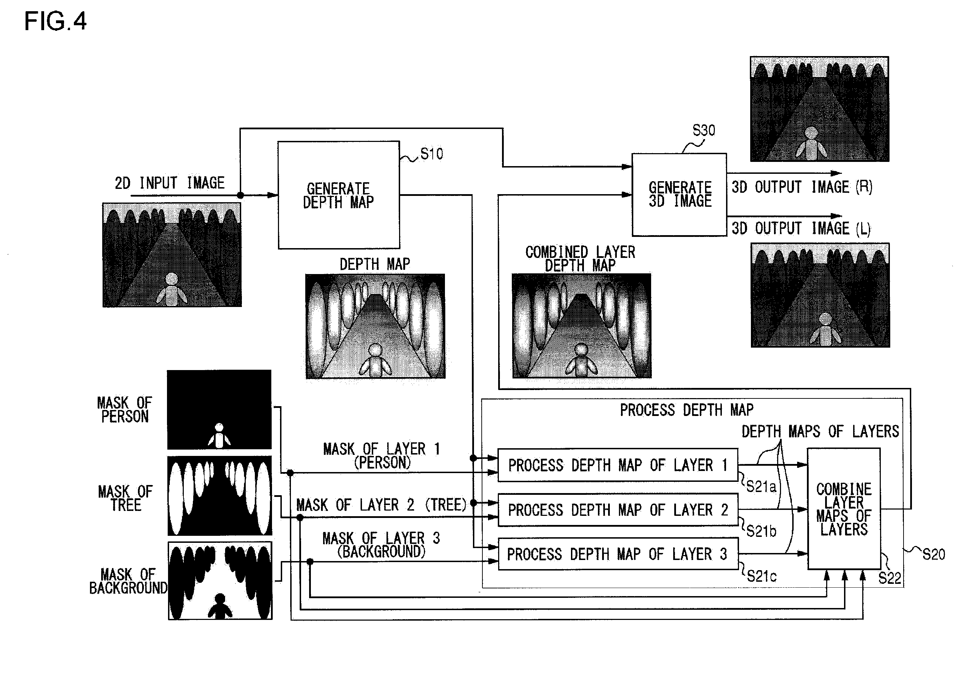

Fig. 4 is a diagram illustrating overall process procedures of the image editing system 500 according to the first embodiment of the present invention. Generally, a 2D image includes a plurality of objects. The 2D input image of Fig. 4 includes three objects. Specifically, person, tree and background objects are included. First, the depth map generation unit 10 generates a depth map from the 2D input image (step S10). The depth map indicates that the closer to white, the higher the luminance and the shorter the distance from an observer, and the closer to black, the lower the luminance and the longer the distance from the observer. In a case of generating 3D images, a protrusion amount increases as much as a region close to white of the depth map, and a withdrawal amount increases as much as a region close to black.

In the present embodiment, in order to individually adjust the sense of depth for a plurality of objects in an image, an effect is independently adjusted for each object region in a depth map. Specifically, each object region is specified in a depth map using a plurality of masks indicating the respective object regions in the image. In addition, an effect is individually adjusted for each specified object region, and a plurality of effect-adjusted depth maps are obtained. Further, a single depth map is generated by combining the plurality of depth maps. The depth map is used to generate a 2D image of a different viewpoint from a 2D image of an original viewpoint.

The depth map generation unit 10 automatically generates a depth map of a 2D input image (S10). The generated depth map is input to the depth map processing unit 20. A plurality of masks which respectively indicate a plurality of object regions in the 2D input image are also input to the depth map processing unit 20. These masks are generated based on outlines of the object regions which are traced by the user. For example, the display control unit 50 displays the 2D input image on the display unit 70, and the user traces outlines of regions which are used as the object regions in the 2D input image by using the operation unit 60. The operation reception unit 40 generates outline information of each object region on the basis of a signal from the operation unit 60, and outputs the outline information to the depth map processing unit 20 as a mask. In addition, a mask may be read by the image process device 100 by a scanner reading an outline drawn on a printed matter by the user.

In Fig. 4, a valid region of each mask is drawn white and an invalid region is drawn black. The mask of a person is a pattern in which only a region of the person is valid, and the other regions are invalid. The mask of a tree is a pattern in which only a region of the tree is valid, and the other regions are invalid. The mask of a background is a pattern in which only a region of the background is valid, and the other regions are invalid.

The number of masks per screen is not limited, and the user may set any number thereof. In addition, an object region may be set to a region which is decided as a single object region by the user. For example, as illustrated in Fig. 4, a single object region may be set in a single person, and an object region may be set for each site of the person, and, further, for each part of the site. Particularly, in order to generate high quality 3D images, a plurality of object regions may be set in a single person, and a thickness or a position in a depth direction may be adjusted for each site, and, further, for each part of the site.

The depth map processing unit 20 processes the depth map (hereinafter, referred to as an input depth map) input from the depth map generation unit 10 by using a plurality of masks input via a user interface (S20). The depth map processing unit 20 individually processes the depth map for each region specified by each mask. Hereinafter, the process of the depth map for each region is referred to as a layer process. In addition, a layer-processed depth map is referred to as a layer depth map. In the present specification, the layer is used as a concept indicating the unit of a process on a valid region of a mask.

In Fig. 4, as an example, the depth map processing unit 20 specifies a region of the person from the input depth map by using a mask of the person (a mask of a layer 1), thereby performing the layer process (S21a). Similarly, a region of the tree is specified from the input depth map by using a mask of the tree (a mask of a layer 2), thereby performing the layer process (S21b). Similarly, a region of the background is specified from the input depth map by using a mask of the background (a mask of a layer 3), thereby performing the layer process (S21c).

The depth map processing unit 20 combines the depth maps of the respective object regions of the layer depth maps of the layers 1 to 3 (S22). This depth map obtained through the combination is referred to as a combined depth map. The 3D image generation unit 30 shifts pixels of the 2D input image by using the combined depth map, and generates an image having parallax with the 2D input image (S30). The 3D image generation unit 30 outputs the 2D input image as a right eye image (R) of 3D output images and the generated image as a left eye image (L).

(Gain adjustment)

First, an example of adjusting a gain will be described as the layer process by the depth map processing unit 20. The gain adjustment is a process for adjusting a thickness of an object in the depth direction. If a gain increases, an object is thickened, and, if the gain decreases, the object is thinned.

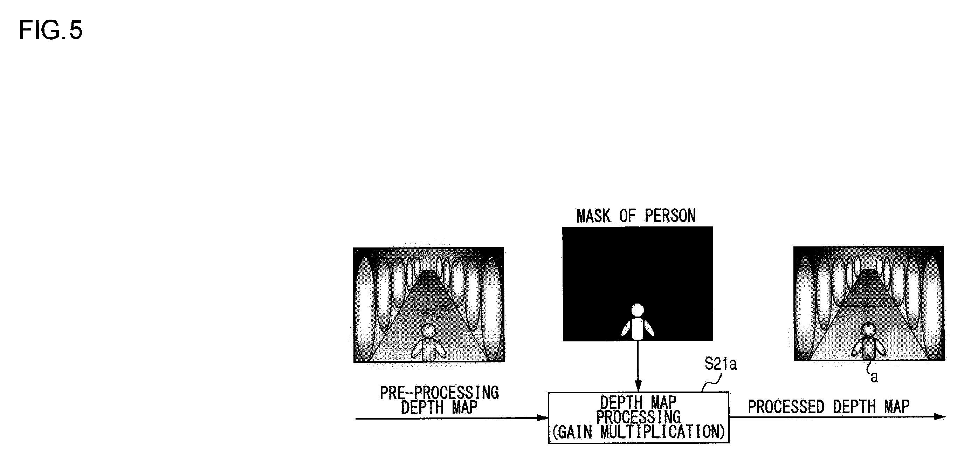

Fig. 5 is a diagram illustrating a gain adjusting procedure of an input depth map. The depth map processing unit 20 multiplies a gain only by the valid region of the mask of the person in the input depth map which is a depth map before being processed, thereby increasing the amplitude of a depth value of only the person part of the input depth map (S21a). In Fig. 5, the amplitude of the person part increases in the layer depth map which is a depth map after being processed (refer to the reference sign a).

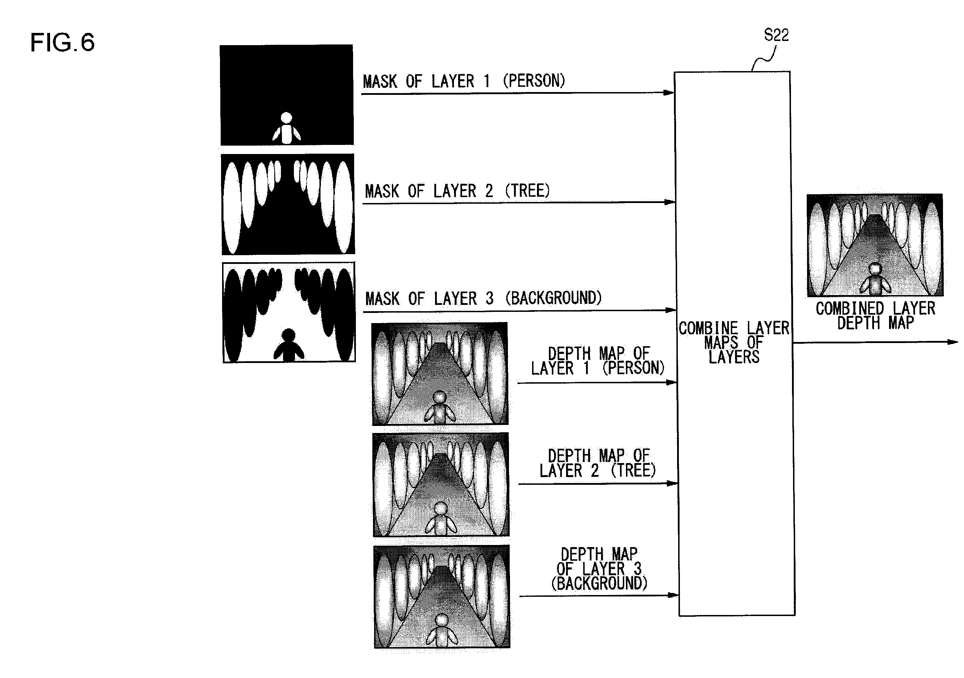

Fig. 6 is a diagram illustrating a combining process procedure of layer depth maps. The depth map processing unit 20 cuts only a valid region of the mask (the mask of the person) of the layer 1 from the layer depth map of the layer 1 (a depth map of the person). Similarly, only a valid region of the mask (the mask of the tree) of the layer 2 is cut from the layer depth map of the layer 2 (a depth map of the tree). Similarly, only a valid region of the mask (the mask of the background) of the layer 3 is cut from the layer depth map of the layer 3 (a depth map of the background). The depth map processing unit 20 combines the three cut depth maps so as to generate a combined depth map.

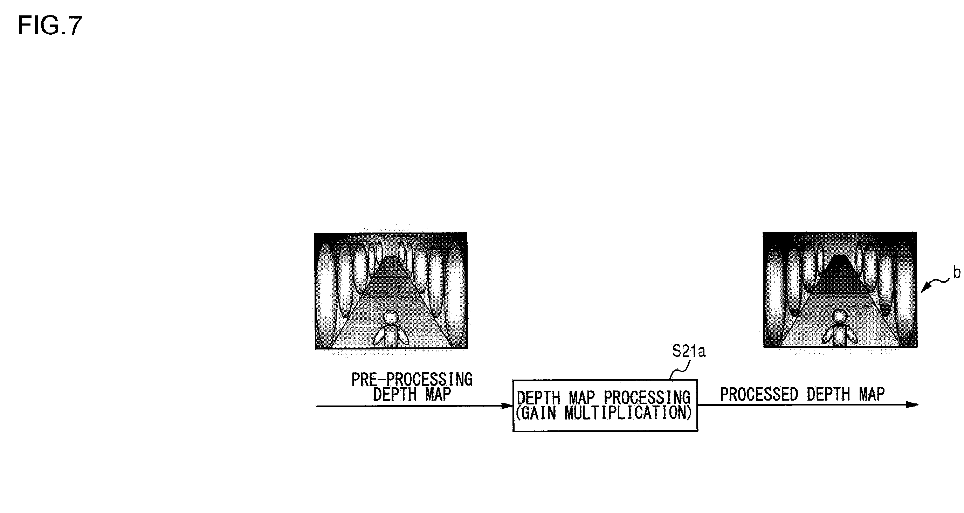

Fig. 7 is a diagram illustrating a gain adjusting procedure of an input depth map in which a mask is not used. When the layer depth maps are combined, if only a valid region of a mask of each layer depth map is used, an invalid region of the mask of each layer depth map is not reflected on a combined depth map. Therefore, the depth map processing unit 20 multiplies a gain by the entire input depth map so as to increase the amplitude of a depth value of the entire input depth map (S21a). In Fig. 7, the amplitude of the entire layer depth map increases (refer to the reference sign b).

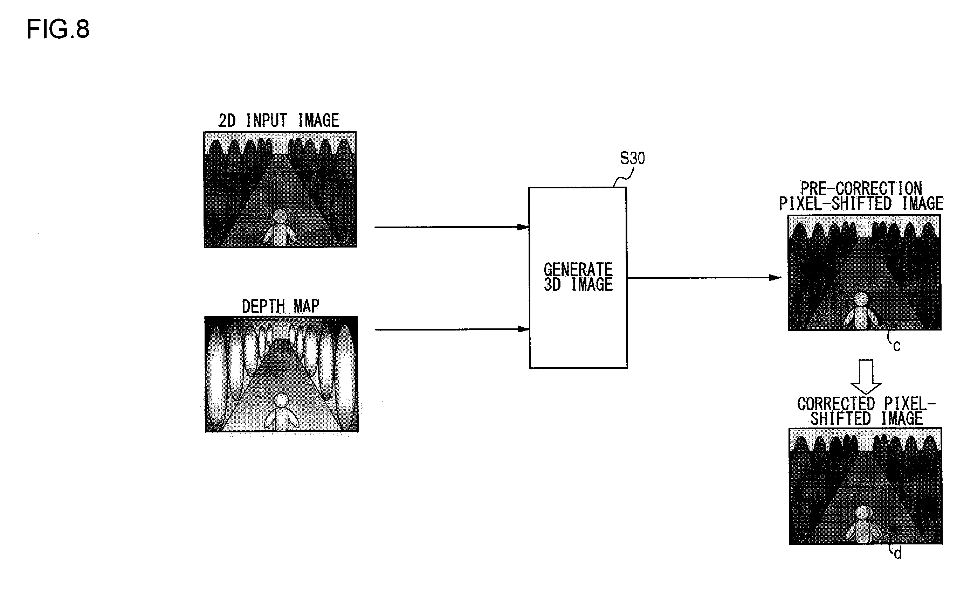

Fig. 8 shows the process of generating a 3D image by the 3D image generation unit 30. The 3D image generation unit 30 shifts pixels of a 2D input image on the basis of a combined depth map and generates an image having parallax with respect to the 2D input image (S30). Fig. 8 illustrates an example in which pixels of a person region in a 2D input image are shifted to the left. The 3D image generation unit 30 adds an offset value to a depth value of the person region in the combined depth map. Offset adjustment will be described in detail below. If the depth value of the person region increases, a protrusion amount of the person region of 3D images increases.

When the pixels of only the person region are shifted without shifting the pixels of the peripheral background region of the person region, an omitted pixel region with no pixels may occur (refer to the reference sign c of the pixel-shifted image before being corrected). The 3D image generation unit 30 interpolates the omitted pixel region using pixels generated from peripheral pixels, thereby correcting the omitted pixel region. There are various methods for pixel interpolation, and, for example, the interpolation is performed using pixels in the boundary of the person region (refer to the reference sign d of the pixel-shifted image after being corrected).

(Offset adjustment)

Next, an example of adjusting an offset will be described as the layer process by the depth map processing unit 20. The offset adjustment is a process for adjusting a position of an object in the depth direction. If a positive offset value is added, an object is moved in a direction in which the object protrudes, and, if a negative offset value is added, the object is moved in a direction in which the object withdraws.

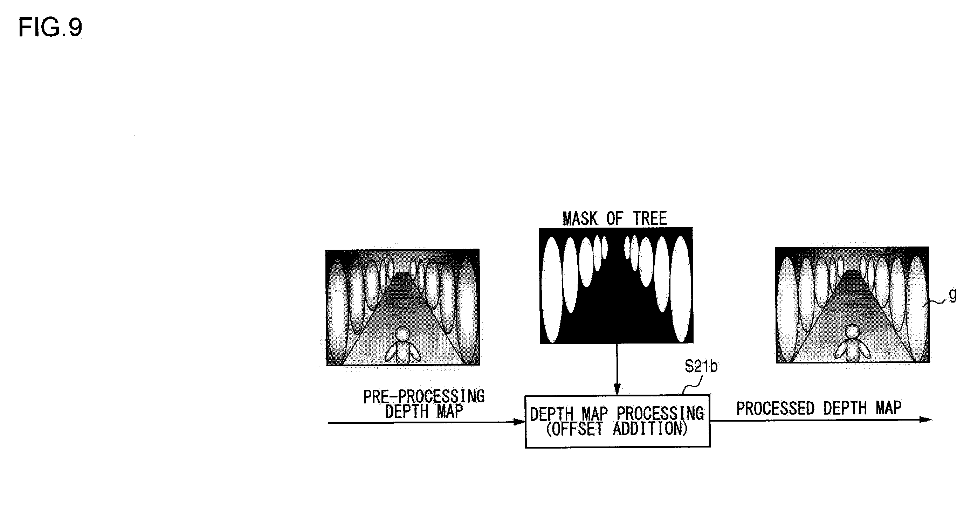

Fig. 9 is a diagram illustrating an offset adjusting procedure of the input depth map. The depth map processing unit 20 adds an offset to only the valid region of the mask of the tree in the input depth map which is a depth map before being processed, thereby increasing a level of a depth value of the tree part in the input depth map (S21b). In Fig. 6, a level of the tree part increases in the layer depth map which is a depth map after being processed (refer to the reference sign g).

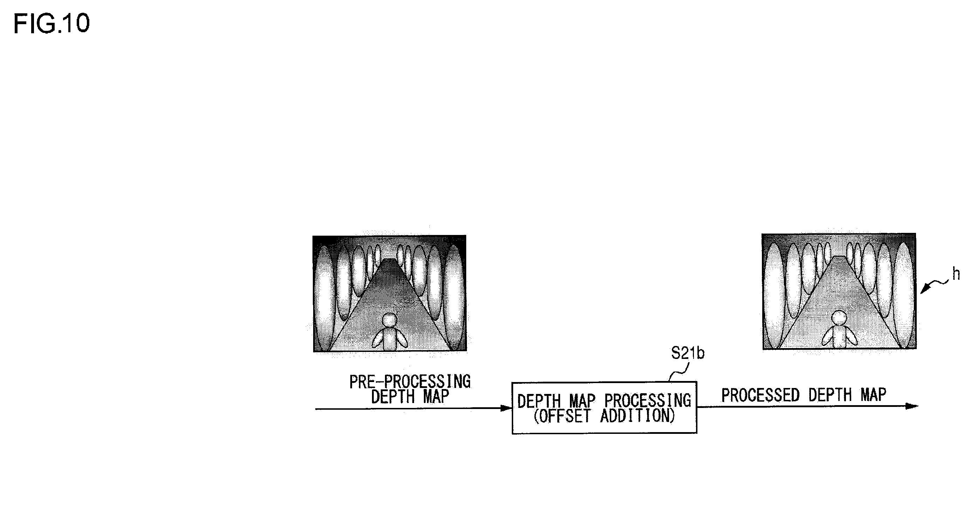

Fig. 10 is a diagram illustrating an offset adjustment procedure of an input depth map in which a mask is not used. When the layer depth maps are combined, if only a valid region of a mask of each layer depth map is used, an invalid region of the mask of each layer depth map is not reflected on a combined depth map. Therefore, the depth map processing unit 20 adds an offset to the entire input depth map so as to increase the level of a depth value of the entire input depth map (S21b). In Fig. 10, the level of the entire layer depth map increases (refer to the reference sign h).

The offset value used to adjust an offset is defined externally. The user enters a desired offset value using the operation unit 60. The operation reception unit 40 receives the offset value entered via the operation unit 60 and sets the offset value in the depth map processing unit 20. In the above description, it is assumed that an offset value is added to an object region in the depth map. Alternatively, an offset value may be added to the combined depth map.

An attempt to adjust the gain in the combined depth map instead of an object region in the depth map may not result in gain adjustment as intended. In the following description, it is assumed that the dynamic range of depth values in a depth map is enlarged or reduced so as to enhance or reduce the perspective (sense of depth). Enhancement of the perspective will be described below. However, reduction of the perspective may similarly be performed.

A uniform gain may be applied to the combined depth map in order to enhance the perspective in the entire screen. This will enlarge the dynamic range of depth values but, at the same time, magnifies the amplitude of unevenness on individual objects. Magnification of the amplitude of unevenness may or may not meet the intended purpose.

A description will now be given of an adjustment method whereby the dynamic range of depth values is enlarged but the amplitude of unevenness on individual objects remains unchanged. Differences between the average values of depth values of the entire depth map and the average values of depth values in respective object regions in the depth map are determined. The depth map processing unit 20 multiplies the differences by a common coefficient to adjust the dynamic range of the entire depth map. The result of computation will represent the offset value of depth values in the respective object regions. The depth map processing unit 20 adds respective offset values to the depth values in the respective object regions.

The method will be described by way of a specific example. Given that the depth values in the combined depth map are distributed in a range -X - +X, the distribution of depth values -X - +X will be referred to as the dynamic range of the depth values. It will be assumed by way of example that the dynamic range is sought to be enlarged. For example, the dynamic range of depth values is magnified by 1.5 so that the distribution of depth values is expanded from -X - +X to -1.5X - +1.5X. The following steps are performed in order to enlarge the dynamic range of depth values without changing the amplitude of unevenness on individual objects.

The depth map processing unit 20 computes the minimum value, maximum value, and average value of depth values in the entire depth map. The difference between the minimum value and the maximum value represents the dynamic range of depth values. The depth map processing unit 20 then computes the average values of depth values in respective object regions in the depth map. The depth map processing unit 20 then subtracts the average value of depth values in the entire depth map from the average values of depth values in the respective object regions. The results of subtraction will be referred to as average differences of layer depth.

It will be assumed that the dynamic range of depth values is sought to be enlarged by a factor of a. The depth map processing unit 20 multiplies the average differences of the respective layer depths by a. The depth map processing unit 20 subtracts the average differences of the respective layer depths from the average depths of the respective layer depths multiplied by a. The results of subtraction will be referred to as offset values of the average differences of the respective layer depths. Finally, the depth map processing unit 20 adds the offset values of the average differences of the respective layer depths to the depth values in the respective object regions in the depth map.

This changes only the offset values for the depth values in the respective layer depth maps and does not change the amplitude of depth values. Consequently, the dynamic range of depth values can be enlarged without changing the amplitude of unevenness on individual objects.

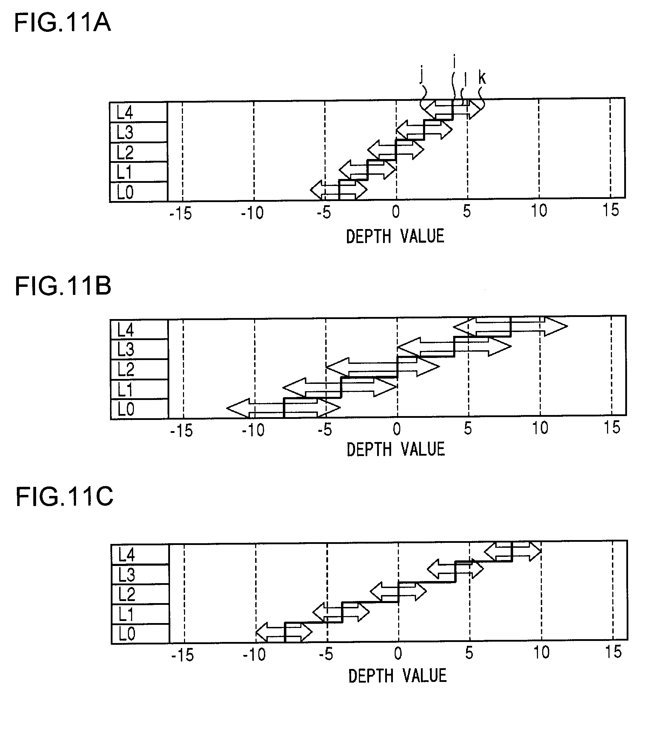

Figs. 11A-11C illustrate dynamic range adjustment in an entire depth map. The description above assumes that there are 3 layers in a 2D input image. Figs. 11A-11C show an example with 5 layers (layer 0-layer 4). In the eyes of a viewer, the layer 0 object appears most receding and the layer 4 object appears most protruding.

Fig. 11A shows examples of depths of respective layers before dynamic range adjustment. An arrow (see symbol l) in each layer is defined by the minimum value (see symbol j) and the maximum value (see symbol k) of the depth values in the object region of each layer. In other words, an arrow (see symbol l) represents the dynamic range of each layer. The line connecting the arrows connects the average values (see symbol i) of depth values in the object regions of the respective layers.

Fig. 11B shows depths of respective layers resulting from uniformly subjecting the depths in the respective layers of Fig. 11A to gain adjustment by the factor of 2. The dynamic range of the entire depth map is enlarged by a factor of 2 and the dynamic range in the object regions of the respective layers, i.e. the amplitude of surface unevenness in the respective layers is also enlarged by a factor of 2.

Fig. 11C shows depths of respective layers resulting from applying the aforementioned offset adjustment to the depths of the respective layers of Fig. 11A. The dynamic range of the entire depth map is enlarged by 2, but the dynamic range in the objects regions in the respective layers, i.e. the amplitude of surface unevenness in the respective layers remains unchanged. For example, where a plurality of persons (objects) are shown on the screen, the perspective can be enhanced by adjusting the distance between persons without changing the thickness of each person.

(Provision of gradation)

A description will be given of a layer process performed by the depth map processing unit 20 to provide a gradation. Provision of a gradation is a process of grading the depths of individual objects.

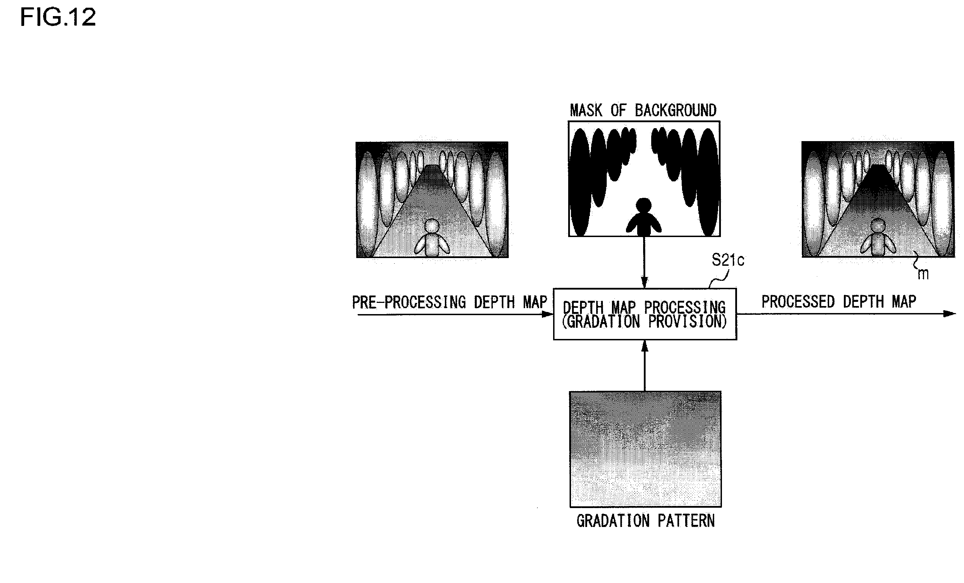

Fig. 12 illustrates the process of providing a gradation to an input depth map. The depth map processing unit 20 processes a pre-process, input depth map such that a gradation is provided only to the effective region of the background mask (only to the ground in the case of Fig. 12) so as to grade the depth values only in the background portions (S21c). Referring to Fig. 12, the depth of the ground is graded in the layer depth map (the depth map as processed) (see symbol m).

A specific description will be given. The gradation pattern storage unit (not shown) stores at least one pre-generated gradation pattern. The gradation pattern storage unit may store gradation patterns of various forms such as a spherical pattern and cylindrical pattern as well as the planer gradation pattern as shown in Fig. 12. A plurality of gradation patterns that differ in the angle and/or direction of grading may be available for a gradation pattern of a given form.

The user can display a plurality of gradation patterns stored in the gradation pattern storage unit on the display unit 70 and select one of the patterns, using the operation unit 60. The operation reception unit 40 receives an input from the operation unit 60 so as to acquire the gradation pattern corresponding to the input and output the pattern to the depth map processing unit 20.

The depth map processing unit 20 receives an input depth map from the depth map generation unit 10, a mask from an external source, and a gradation pattern from the gradation pattern storage unit. The depth map processing unit 20 provides the gradation pattern to the effective region of the mask within the input depth map.

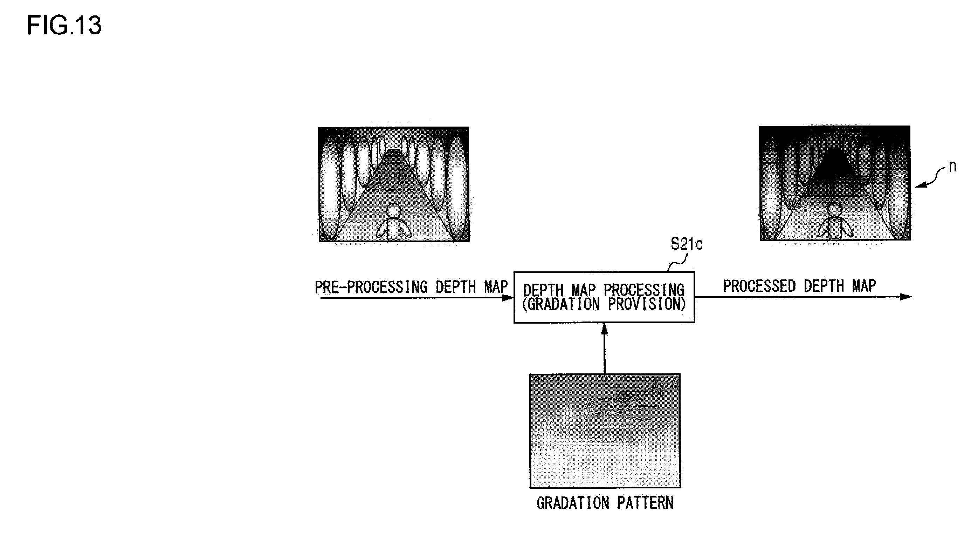

Fig. 13 illustrates the process of providing a gradation to an input depth map without using a mask. If a valid region of a mask of each layer depth map is only used when combining the layer depth maps, an invalid region of the mask of each layer depth map is not reflected in a combined depth map. Therefore, the depth map processing unit 20 provides a gradation to the entire input depth map so as to grade the depth values in the entire input depth map (S21c) Referring to Fig. 13, the entire layer depth map is graded (see symbol n).

In the above description, it is assumed that the gradation pattern that should be provided to a depth map is selected from typical pre-generated gradation patterns. A description will now be given of designating the gradation pattern that should be provided to a depth map by a control parameter. The depth map processing unit 20 provides a gradation to an object region in the depth map, based on a gradient parameter and a direction parameter of the gradation that are externally defined and independently adjustable. The depth map processing unit 20 is also capable of providing a gradation such that a designated region in the depth map is subjected to offset adjustment based on an externally defined offset parameter.

The user can enter a gradient parameter, a direction parameter, and an offset parameter of the gradation by using the operation unit 60. The operation reception unit 40 receives an input from the operation unit 60 and outputs the input to the depth map processing unit 20.

The process of providing a gradation to a depth map can be implemented by providing the pixels in the depth map with gradation depth values determined by the angle and gradient of the gradation. Control parameters to effect this process will be denoted by Slope and Angle. Slope is defined by a value representing a change in the depth value per a single pixel. In the following discussion, a gradient model in which the depth value changes proportionally will be assumed for brevity. Various other gradient models are possible. For example, the depth value may be changed exponentially.

Slope : Gradient of gradation [depth value/pixel]

Angle : Angle of gradation relative to image [degree]

It will be assumed that the gradation provided is centered around the center of the screen. The coordinates of the center of the screen will be denoted as $(x,y)=(0,0)$. The coordinates of an arbitrary pixel in the image will be denoted as $(x,y)=(x\_base,y\_base)$. Denoting the gradient values of the gradation in the X-axis direction and the Y-axis direction as slope_x and slope_y, respectively, slope_x and slope_y are given by the following expressions (1) and (2).

$$\mathtt{slope\_x=slope*cos\theta=slope*cos(2\pi*(Angle/360))\ \ ...(1)}$$

$$\mathtt{slope\_y=slope*sin\theta=slope*sin(2\pi*(Angle/360))\ \ ...(2)}$$

Denoting the gradation depth values in the X-axis direction and the Y-axis direction at a given coordination point as grad_depth_x and grad_depth_y, respectively, grad_depth_x and grad_depth_y are given by the following expressions (3) and (4).

$$\mathtt{grad\_depth\_x=Slope\_x*x\_base\ \ ...(3)}$$

$$\mathtt{grad\_depth\_y=Slope\_y*y\_base\ \ ...(4)}$$

Denoting the gradation depth value provided to the depth values of a given pixel to provide a gradation to a depth map as grad_depth, grad_depth is given by the following expression (5).

$$\text{grad\_depth}=\text{grad\_depth\_x}+\text{grad\_depth\_y} \ldots(5)$$

By adding the gradation depth value determined by expression (5) above to the respective pixels in the depth map, the depth map is provided with the gradation accordingly. The gradient of the gradation can be defined at will by varying the value of Slope, and the angle of the gradation with respect to the image can be defined at will by varying the value of Angle.

The method of providing a gradation to a depth map is described above with reference to expressions (1)-(5). According to the above-described method, gradation depth values are provided with reference to the center of the screen so that the depth values of the depth map around the center of the screen remain unchanged. A description will be given of a method of providing a gradation and an offset to a depth map at the same time so as to provide a gradation of an arbitrary level at an arbitrary position.

The parameter to control an offset value provided will be noted by Offset.

Offset: Offset of gradation

Denoting the gradation depth value added to the pixels to provide a gradation to a depth map and including an offset value as grad_offset_depth, grad_offset_depth is given by expression (6)

$$\text{grad\_offset\_depth}=\text{grad\_depth\_x}+\text{grad\_depth\_y}+\text{Offset} \ldots(6)$$

This allows a gradation of an arbitrary level at an arbitrary position in the screen. In the above description, it is assumed that a gradation is provided to an object region in the depth map. Alternatively, a gradation may be provided to the combined depth map.

According to the first embodiment as described above, a high-quality 3D image can be generated from a 2D image without requiring much hassle on the part of the user. More specifically, by estimating the scene structure using the depth map generation unit 10 and varying the ratio of combining a plurality of basic depth modes, a depth map reflecting the scene structure can be generated automatically. The depth map processing unit 20 reflecting a request of the user processes objects in the depth map individually. This can generate a high-quality 3D image and reduce the amount of work significantly as compared with a case where the user generates a 3D image of the same quality from scratch based on a 2D image.

The depth map used in 2D-3D conversion shown in Fig. 1 stores the depth values defined in relation to the screen as a whole. By subjecting the depth map to gain adjustment or offset adjustment, the perspective of the screen as a whole can be adjusted at will. By providing the depth map with a gradation, the gradient of perspective of the screen as a whole can be adjusted at will.

Generally, however, an image generally contains a plurality of objects. In the example of this specification, a person, trees, and the background are found in the image. If the perspective of a person is enhanced by adjusting the gain of the depth map, the perspective of the trees and the background is also changed in association. It is therefore difficult to adjust the perspective of a person independently. If the perspective of the trees is enhanced by adjusting the offset of the depth map, the perspective of a person and the background is also changed in association. It is therefore difficult to adjust the perspective of the trees independently. If the depth map is provided with a gradation in order to grade the perspective of the background, the perspective of a person and the trees is also graded in association. It is therefore difficult to grade the perspective of the background alone.

According to the image editing system 500 of the embodiment, the degree of unevenness and gradient thereof of individual objects in an image can be varied desirably and independently. Therefore, the user can desirably and independently control the perspective of individual objects in a 3D image generated based on a depth map used in 2D-3D conversion according to the embodiment. Accordingly, a high-quality 3D image can be generated.

A description will now be given of the second embodiment. The first embodiment provides a method of processing a depth map on an object by object basis using a mask so as to provide the objects with stereoscopic appearance. The method is useful to enhance the stereoscopic appearance of individual objects. It is difficult, however, to enhance the volume inside an object. Therefore, the object itself lacks volume and appears flat.

The second embodiment provides a method of generating a 3D image with improved stereoscopic appearance in which the volume of an object as a whole is perceived, instead of a 3D image appearing flat or provided with unevenness only locally. The method is implemented by performing the following steps in a depth map that serves as a basis to generate a 3D image. First, the form of an object is identified. The stereoscopic appearance conforming to the form of the object is then estimated. A gradation-like emboss pattern conforming to the estimated stereoscopic appearance is then generated. Finally, the generated emboss is added to the depth map.

Through these steps is generated a depth map provided with an emboss conforming to the form of the object. By performing 3D conversion using the depth map, a 3D image with improved stereoscopic appearance in which the volume of the object as a whole is perceived can be generated.

The depth map processing unit 20 according to the second embodiment adjusts the form of the depth map generated by the depth map generation unit 10 in each of a plurality of object regions designated by a plurality of externally defined masks. The depth map processing unit 20 then processes the depth map by using a volume emboss pattern described later such that the center of an object region has different depth values from the periphery. More specifically, the depth map processing unit 20 processes the depth map such that the center of an object region has depth values characterized by larger amounts of protrusion than the periphery. More preferably, the depth map processing unit 20 processes the depth map such that the amount of protrusion gradually varies from the center toward the periphery in the object region. More preferably, the depth map processing unit 20 processes the depth map such that the depth values define a rounded form inside the object region. A specific description will now be given.

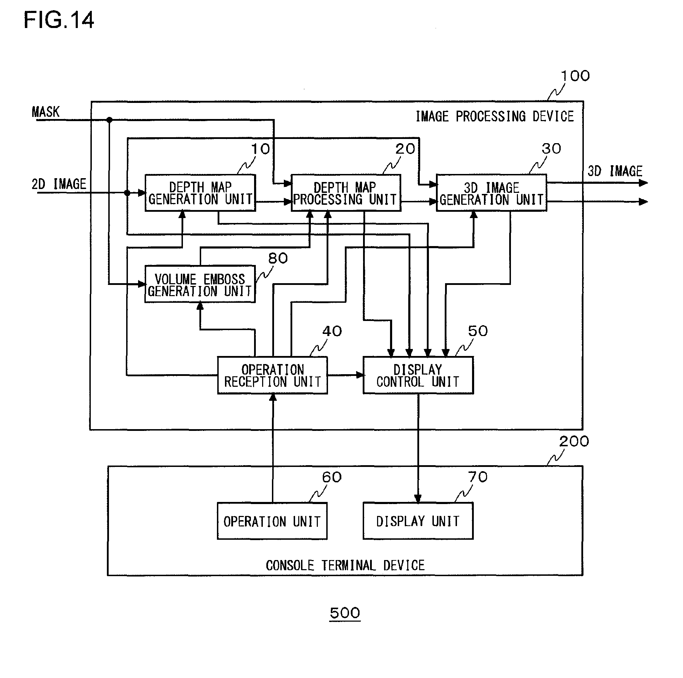

Fig. 14 shows the structure of the image editing system 500 according to the second embodiment. The image process device 100 in the image editing system 500 according to the second embodiment includes a volume emboss generation unit 80 in addition to the components of the image process device 100 according to the first embodiment. The volume emboss generation unit 80 refers to the outline form of an object in an input mask and generates an emboss of the object accordingly. The emboss represents an estimation of the form of the depth of the object. Therefore, the volume emboss generation unit 80 can be said to be a depth estimation device.

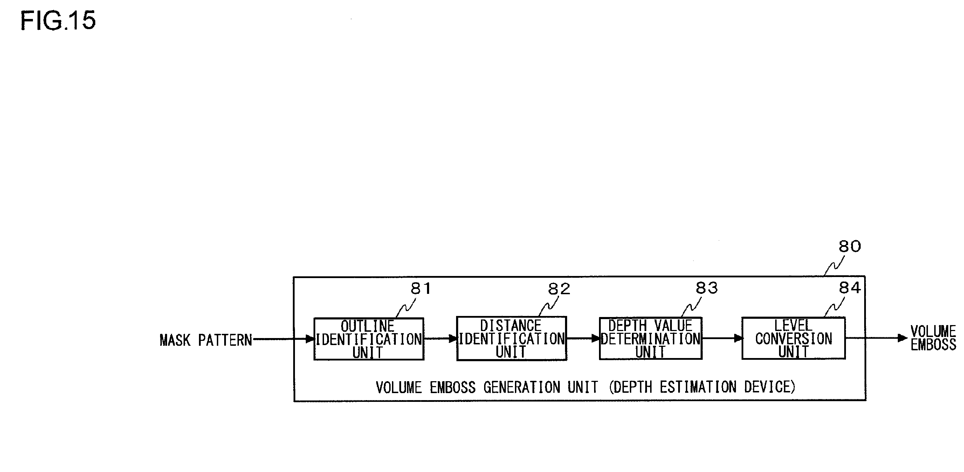

Fig. 15 shows the structure of the volume emboss generation unit 80 according to the second embodiment. The volume emboss generation unit 80 includes an outline identification unit 81, a distance identification unit 82, a depth value determination unit 83, and a level conversion unit 84.

The outline identification unit 81 identifies the position of the outline of an object based on an input mask. The mask is identical to the mask input to the depth map processing unit 20.

The distance identification unit 82 determines the minimum distance between a target pixel in the object region and the outline of the object identified by the outline identification unit 81. For example, the minimum distance is determined by searching for a point of contact with the outline by using search circles concentrically spaced apart from each other around the position of the target pixel. Details of the search method will be described later. The concentric circles may be spaced apart from each other by a single pixel per one step. Alternatively, a spiral may be employed for a search. In a simplified mode, search circles spaced apart from each other by several pixels (e.g., four pixels) may be used. In this case, precision is lowered, but the time to reach the outline is reduced. The distance identification unit 82 determines the minimum distance between each of all pixels in the object region and the outline.

The depth value determination unit 83 determines the depth value of a target pixel in accordance with the minimum distance determined by the distance identification unit 82. The depth determination unit 83 ensures that the larger the minimum distance, the larger the amount of protrusion. This is achieved by controlling the depth value so as to result in a larger amount of protrusion. This is based on a model in which the protrusion grows larger away from the outline and toward the center of the object region. Since the distance identification unit 82 determines the minimum distance between each of all pixels in the object region and the outline, the depth values for all pixels in the object region are determined. Consequently, an emboss pattern based on the depth map of the object is generated.

The level conversion unit 84 subjects the emboss pattern generated by the depth value determination unit 83 to level conversion by using a mapping function or a numeral conversion table. Level conversion allows desirable modification of the form defined by the depth values determined by the depth value determination unit 83. A specific example of level conversion will be described later.

The depth map processing unit 20 generates a layer depth map, which is described above, and processes the layer depth map in accordance with the emboss pattern of the object generated by the volume emboss generation unit 80. More specifically, the depth map processing unit 20 generates a plurality of layer depth maps by subjecting the depth map generated by the depth map generation unit 10 to a layer process. A layer process includes gain adjustment, offset adjustment, and provision of a gradation as described in the first embodiment. The depth map processing unit 20 subjects the depth map in each object region to a designated layer process. The depth map processing unit 20 provides the layer depth map thus generated with the emboss pattern of the corresponding object generated by the volume emboss generation unit 80.

The depth map processing unit 20 may not subject the depth map generated by the depth map generation unit 10 to a layer process, and provide each object region in the unprocessed depth map with the emboss pattern of the corresponding object generated by the volume emboss generation unit 80.

The depth map processing unit 20 combines the plurality of processed layer maps. This generates a depth map used in 2D-3D conversion.

A detailed description will now be given, by way of a specific example, of the process performed by the depth map processing unit 20 according to the second embodiment. According to the second embodiment, the following steps are performed in order to ensure that the volume of an object as a whole is perceived. First, the form of an object is identified. The stereoscopic appearance conforming to the form of the object is then estimated. A gradation-like emboss pattern conforming to the estimated stereoscopic appearance is then generated. Finally, the generated emboss is added to the depth map.

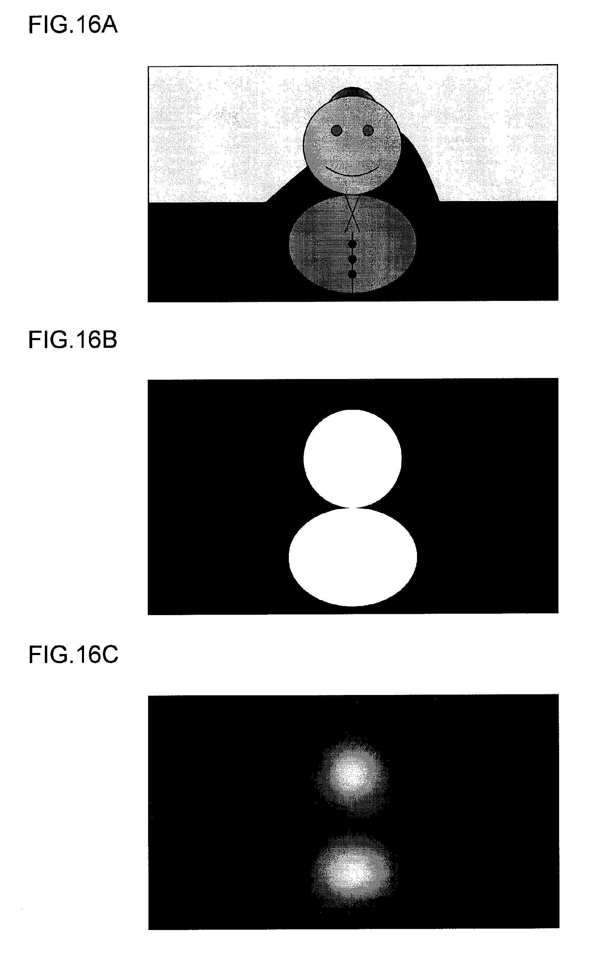

Figs. 16A-16C show a method of generating a depth map of an object according to the second embodiment. The mask input to the outline identification unit 81 is drawn along the outline of the object and includes a pattern of black and white identifying areas outside and inside the object, respectively. The form of the mask allows estimation of the approximate form of the object itself.

Fig. 16a shows an exemplary original image, and Fig. 16B shows an exemplary mask of the original image. The mask shown in Fig. 16B is a mask of a person in the image. The mask of the person includes both the head and the body.

A model estimated from the three following experimental rules is defined in order to estimate the stereoscopic appearance conforming to the form of the object. Firstly, an object is rounded as a whole. Secondly, the center of an object protrudes more toward the viewer than the ends thereof. Thirdly, a wide portion of an object protrudes more toward the viewer than a narrow portion.

In case an object represents a person, the head appears rather spherical structurally and the body appears close to a prolate spheroid that approximates a cylinder. Bulky portions such as the body appear thicker than slim portions like the arm and the neck. These empirical rules define the above-mentioned model.

The following steps are performed in order to generate a gradation-like emboss pattern conforming to the estimated stereoscopic appearance. An area inside the object, i.e., an area where the mask is effective, is identified. Such an area in the mask is depicted in white.

The distance identification unit 82 then measures the distance between a given mask pixel inside the area and the mask edge closest to the pixel. This gives a measure indicating how close the pixel is to the center of the object region. The larger the distance, the closer the pixel to the center of the object region. The distance identification unit 82 defines the distance for the pixels in the area outside the object, i.e., the area where the mask is invalid, to be zero. Such an area in the mask is depicted in black.

The depth value determination unit 83 converts distance information thus determined into luminance information and creates an image table. This produces a gradation-like emboss pattern in which the luminance is zero in the area outside the object and grows higher toward the center of the inner area. Hereinafter, such a pattern will be referred to as a volume emboss.

Fig. 16C shows an exemplary volume emboss of a person generated by using the mask of Fig. 16B. Bright portions represent protrusions. The gray color in the area corresponding to the area of invalid mask shows that the depth values are zero.

Finally, the depth map processing unit 20 adds the generated volume emboss to the layer depth map. This provides the object with a volume emboss conforming to the form of the object and generates a depth map in which individual portions in the object are provided with fine unevenness. 3D conversion using this depth map produces a 3D image with improved stereoscopic appearance in which the volume and fine unevenness of the object as a whole are perceived.

A description will be given of a specific method of measuring the minimum distance between a given target pixel in an object region and the mask edge. The distance identification unit 82 examines (searches) neighboring mask pixels in the object region, with the target mask pixel position at the center. The search is started with pixels near the target pixel and extended toward distant pixels. For example, a search position defined by a predetermined angle and radius is defined around the target pixel. The search position is shifted by increasing the radius each time the angle varies by 360°. When a black mask pixel is first identified in the process of the search, it means that the mask edge closest to the target pixel is identified. The distance identification unit 82 identifies the distance between the target pixel and the black mask pixel identified. This can determine the minimum distance between the target pixel and the mask edge. The distance gives a measure indicating how close the target pixel is to the center of the object region.

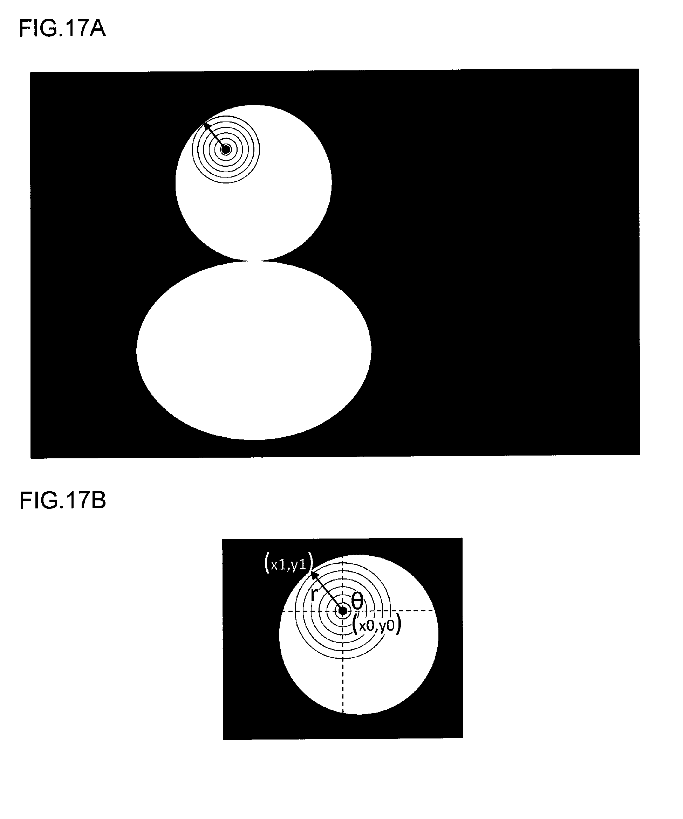

Figs. 17A-17C illustrate the process of searching for the minimum distance between a target pixel in an object region and the mask edge. Fig. 17A shows how a search for the minimum distance between a pixel in the object region and the mask edge is conducted spirally in the mask shown in Fig. 16B. Fig. 17A shows a search for the minimum distance between a pixel forming the head of a person and the mask edge. Fig. 17B shows the head of the person and the surrounding portion in the mask shown in Fig. 17A on an enlarged scale.

A description will be given of a specific method of measuring the minimum distance between an arbitrary pixel in an object region in the mask shown in Fig. 17B and the mask edge. Referring to Fig. 17B, the object region is in white, and the mask edge is a boundary between the white region and the black region. The coordinates of an arbitrary pixel in the object region are defined as $(x0, y0)$.

The distance identification unit 82 examines mask pixels spirally, starting at the base point $(x0, y0)$. In other words, the distance identification unit 82 sequentially examines pixels at coordinates on the circle centered at $(x0, y0)$. When a search around a circle is completed, the radius of the circle is incremented by one step. The search is repeated until a black mask pixel is identified. The search is conducted by incrementing the radius of a circle one step a time. Therefore, the coordinates of a black mask pixel first identified represents the coordinates of the mask edge at the minimum distance from the base point (x0,y0).

Denoting the radius of a search circle as r and the angle as θ, the coordinates (x,y) of the pixel examined in the search are given by the following expressions (7) and (8).

$$x=r*\cos\theta+x0 \quad...(7)$$

$$y=r*\sin\theta+y0 \quad...(8)$$

Given that the coordinates where a black pixel is first identified in the search as (x1,y1), the distance L between the base point (x0,y0) and the point of search (x1,y1) is given by expression (9). The distance L represents the minimum distance between the base point (x0,y0) and the mask edge.

$$L=\sqrt{((x1-x0)^2+(y1-y0)^2)} \quad...(9)$$

The method described above of determining the minimum distance from a target pixel to the mask edge is by way of example only. Other methods may be used so long as the minimum distance can be determined.

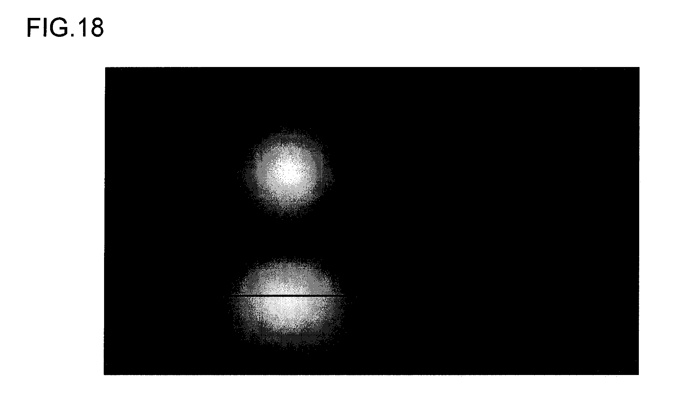

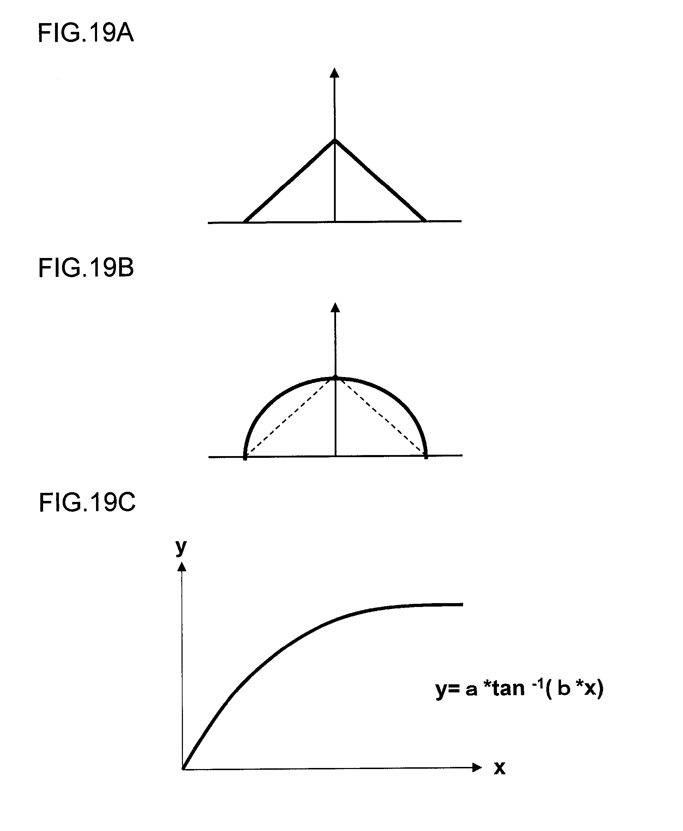

Fig. 18 shows variation of the luminance of a volume emboss. Figs. 19A-19C illustrate level conversion of a volume emboss. The volume emboss generated by the depth value determination unit 28 is derived from directly converting distance information determined by the distance identification unit 82 into luminance information. Information on a distance on a straight line connecting point A to point B in the volume emboss shown in Fig. 18, i.e., luminance information on the straight line, is plotted as a polygonal line as shown in Fig. 19A.

An object usually has a rounded form. The emboss pattern having a shape of a polygonal line as shown in Fig. 19a often does not match the actual stereoscopic appearance. This is addressed by converting linear luminance variation into curved luminance variation for level conversion, using mapping by a curve function. This converts the original volume emboss pattern into a pattern close to the actual object form. Fig. 19 illustrates conversion of luminance variation of Fig. 19A having a shape of a polygonal line into curved luminance variation. In an example shown in Fig. 19B, an arctangent function is used by way of example as a curve function for level conversion.

Fig. 19C is a graph of an arctangent function. Referring to Fig. 19C, a and b in the expression in the graph denote coefficients. Thus, linear luminance variation is converted into curved luminance variation for level conversion, using mapping by an arctangent function. This generates a rounded volume emboss pattern close to the actual object form.

The arctangent function of Fig. 19C is by way of example. A curve deformed in a desired form by varying the coefficients may be used. Instead of an arctangent function, other types of curve functions may be used. A plurality of types of curve functions may be used depending on the object form. An arctangent function is an example of curve function to generate a rounded emboss pattern. A function generating an emboss pattern that is not rounded may be used depending on the object form. A conversion coefficient table may be used for level conversion instead of a function. The original emboss pattern having a shape of a polygonal line may be used instead of mapping luminance levels.

According to the second embodiment as described above, a volume emboss conforming to an object form can be added to a depth map. By performing 3D conversion using the depth map, a 3D image with improved stereoscopic appearance in which the volume of the object as a whole is perceived can be generated. Since the volume emboss is generated automatically, the user does not have to do extra work.

The volume emboss generation unit 80 (depth estimation device) according to the second embodiment is applicable to images in general including computer graphics as well as to masks. The outline identification unit 81 is capable of automatically detecting an object region in an image using a known method. For example, an edge in an image can be detecting by applying a bypass filter to the image.

Many commonly used image processing applications are provided with the function of providing a gradation to an object. The depth estimation device according to the second embodiment is applicable to a process of providing a gradation to an object in an 2D image instead of being put to the use of generating a 3D image.

The gradation provision function in general-purpose image processing applications often does not allow for the form of the depth of an object. In this case, adjustment by the user is required in order to provide a natural gradation. Some high-performance image processing applications like those for generating computer graphics are capable of providing a gradation by allowing for the form of the depth of an object. For example, some applications are designed to determine the gravitational center of an object graphic and providing a gradation so that the gravitational center protrudes more toward the viewer than the other portions.

In comparison with the method of determining the gravitational center, the depth estimation device according to the second embodiment is capable of estimating the form of the depth more precisely. In the case of a simple form such as a circle, the methods produce substantially no difference. In the case of a complicated form, however, the methods produce a substantial difference in precision.

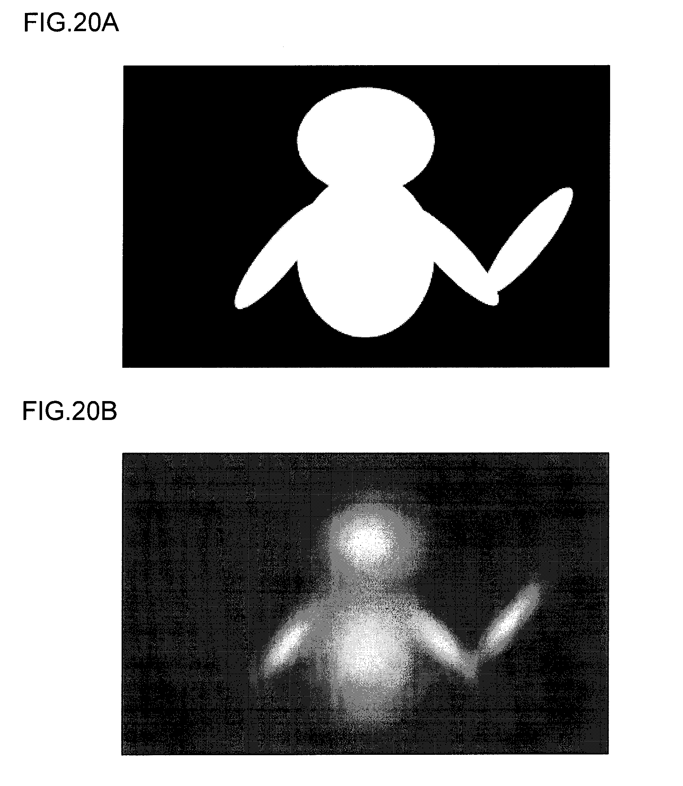

Figs. 20A-20B show an exemplary volume emboss for a complicated object form. Fig. 20A shows a mask for a person like that of Fig. 16B. In addition to the head and the body, the arms and the left arm of a person beside are also included in the object. Fig. 20B shows an exemplary volume emboss for an object generated by using the mask of Fig. 20A. In each of the parts of the generated volume emboss, the volume at the central portion is larger than the other portions. This should reasonably said to be a natural and realistic volume emboss.

By way of contrast, the method of determining the gravitational center cannot be expected to work properly in the first place in the case of the complicated form like that of Fig 20A. Even if the gravitational center is determined, an unnatural volume emboss would result according to a method whereby the volume at the gravitational center is the largest and grows gradually smaller away from the gravitational center. In the case of a person object like that of Fig. 20a, the gravitational centers in the respective portions should ideally be determined. Thus, in order for the method of determining the gravitational center to work, a gradation need be provided to each of the components of simple form so that the components are combined subsequently. This is likely to result in inconsistency in gradation from one component to another. Also, combination of components requires user's work. Further, it is difficult to apply the method of determining the gravitation center to a form such as doughnut in which the gravitation center is difficult to identify.

In contrast, by using the depth estimation device according to the second embodiment, any object can be processed as one object regardless of the form, and accuracy of the volume emboss generated is also high. The simple algorithm of determining the distance from a target pixel to the edge is highly flexible and so can generate a highly precise volume emboss even for a special form such as doughnut.

A description will be given of the third embodiment. Information on a pixel in an image may be used to generate an emboss that should be added to a depth map in order to give an object stereoscopic appearance. This method is capable of providing individual portions of an object with unevenness. It may be difficult, however, to make the volume of the object as a whole perceived.

Alternatively, a depth map may be processed on an object by object basis using a mask so as to give the object stereoscopic appearance. This method is capable of enhance the stereoscopic appearance of each object but is not capable of enhancing the volume inside the object. The object itself will lack volume and appear flat.

Thus, the second embodiment provides a method of generating a proper emboss pattern estimated from an object form in order to give the object stereoscopic appearance. This generates a 3D image with improved stereoscopic appearance in which the volume of an object as a whole is perceived, instead of a flat image or a 3D image provided with unevenness only locally.

The emboss pattern generated according to the method of the second embodiment is uniquely defined in accordance with the distance from a desired point inside an object to the edge of the object. Therefore, the position and form of the vertex and the ridge in the generated emboss pattern are unambiguously determined. The positions of the vertex and the ridge of the emboss pattern correspond to the positions in the 3D image produced by the pattern that are protruding more toward the viewer than the other portions.

The method according to the second embodiment is capable of easily and accurately estimate the form of the depth of an object in an image. In actual images, however, the position and form of the vertex and the ridge of the emboss pattern determined according to the second embodiment may not necessarily match the positions in the object that are protruding more toward the viewer than the other portions. According to the third embodiment described below, the form of the depth of an object in an image is estimated even more accurately. A description will be given, by way of a specific example, of a case where the use of the third embodiment is more useful.

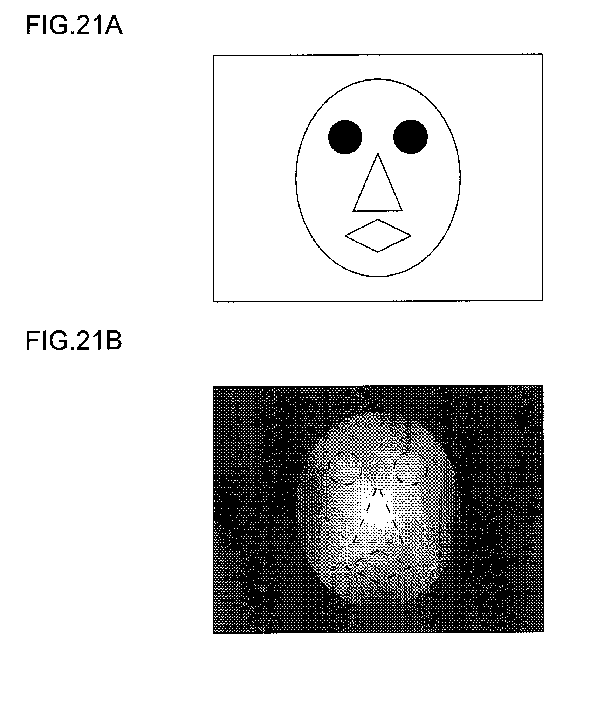

Figs. 21A-21B show an emboss pattern for a person facing front. Fig. 21A shows an original image, and Fig. 21B shows an emboss pattern. The dotted lines in Fig. 21B represent auxiliary lines indicating the positions of object parts in the original image. The white color indicates the direction of protrusion. In the case of an image as shown in Fig. 21A showing a person facing front, it is estimated that the position protruding more toward the viewer than the other portions is located at the center (nose) of the face. In the emboss pattern shown in Fig. 21B, the position of the vertex of the emboss is aligned with the position of protrusion of the object. The perspective that the emboss pattern provides to the 3D image matches that of the actual image and so is proper.

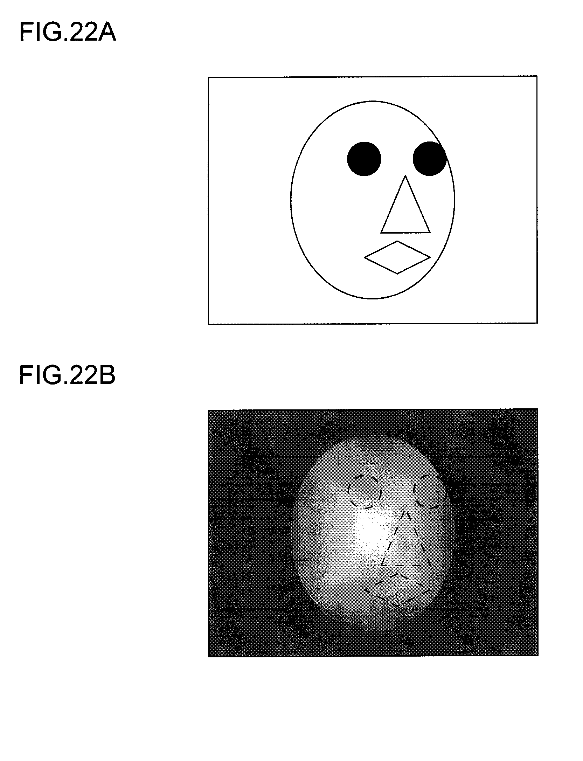

Figs. 22A-22B show an emboss pattern for a person facing to the side. Fig. 22A shows an original image, and Fig. 22B shows an emboss pattern. In the case of an image showing a person looking to the right as shown in Fig. 22A, the position of the nose, which protrudes more toward the viewer than the other portions, is shifted to the right with respect to the center of the object. According to the emboss pattern generated according to the second embodiment, however, the center of the object form is estimated to be the position that protrudes more toward the viewer than the other portions. In the emboss pattern shown in Fig. 22B, the position of the vertex of the emboss is not aligned with the position of protrusion of the object. Consequently, the perspective given to the 3D image by the emboss pattern does not match the actual image.

Methods to make the perspective of an object consistent with the vertex of the depth emboss pattern for creating the perspective include that of letting the user designate the position of the vertex of the object and drawing radial lines from the position to the edge of the object. According to this method, an emboss pattern that provides a perspective with a proper vertex can be generated. However, this method requires introduction of a special graphical user interface for letting the user designate a vertex and of a complicated process of letting the user designate the vertex.

Meanwhile, if an emboss pattern is unambiguously determined in accordance with the distance between a given point in an object and the edge of the object, the perspective inherent to the object may not be reproduced, depending on the form of the object. A description will now be given by way of a specific example.

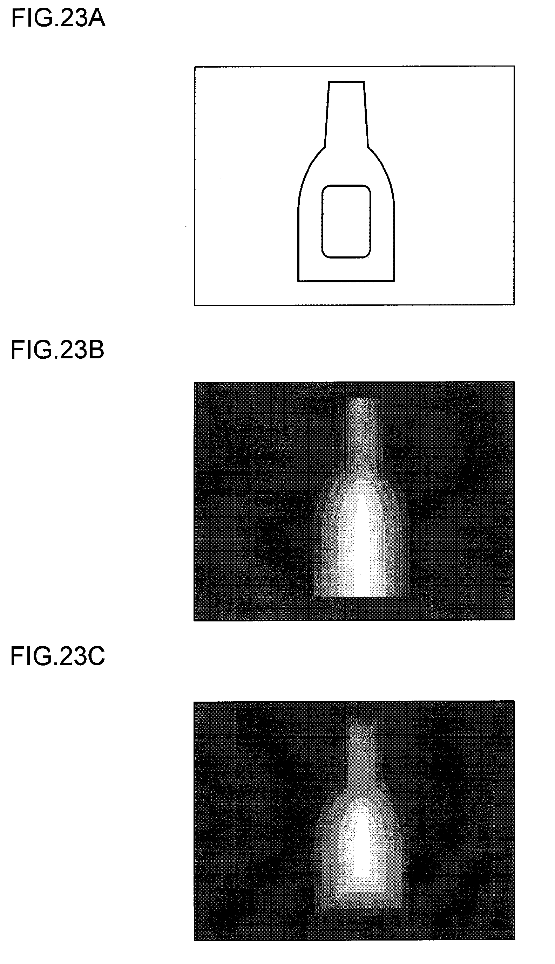

Figs. 23A-23C show an emboss pattern for a bottle. If the object has a form of a body of revolution like a bottle as shown in Fig. 23A, the emboss pattern as shown in Fig. 23B should ideally be generated. However, the emboss pattern generated according to the second embodiment will have an emboss form as shown in Fig. 23C. Thus, the second embodiment will generate an emboss having a form different from the perspective inherent to the object. In the case of a bottle with a cylindrical body, the emboss pattern should not be rounded in the vertical direction, but Fig. 23B shows roundness in the vertical direction.

The method according to the third embodiment does not require introduction of a complicated process of letting the user designate a vertex and still can generate an ideal emboss with a desired portion as the vertex. A simple user operation can generate am emboss pattern centered at the position shifted by an amount designated by the user, making it possible to generate a 3D image with a perspective that matches the actual image. Also, an emboss that matches the perspective inherent to the object can be generated even in the case of an object having a shape of a body of revolution as shown in Figs. 23A-23C.

The third embodiment provides an algorithm for automatically generating an emboss pattern centered at a position shifted by an amount designated by the user instead of at the center of the object. In the second embodiment, a method is employed whereby the height of the emboss pattern at a desired point is determined by measuring the distance between an arbitrary base point inside the object and the edge of the object. In other words, search for an edge pixel is conducted in a spiral manner, starting at a given point inside the object. The distance between the base point and the search point occurring when the closest edge is found is identified. The third embodiment is based on the above method and includes searching for an edge pixel by using a circle of a special form instead of a true circle.

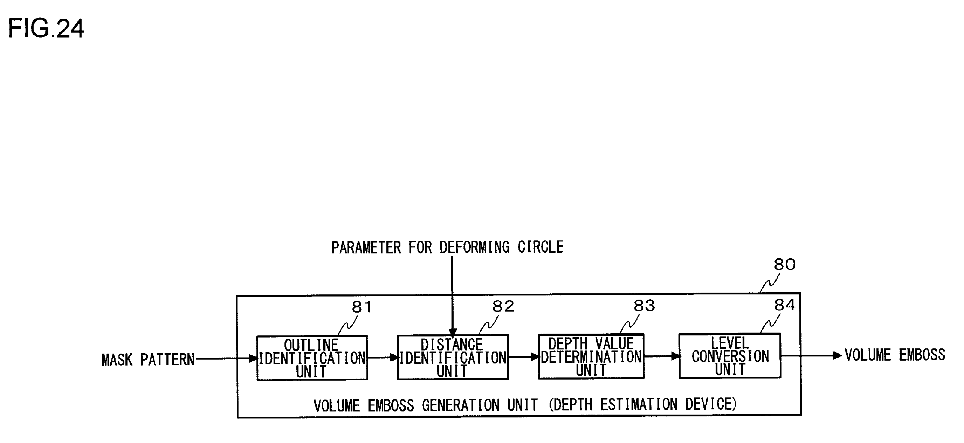

Fig. 24 is a diagram illustrating a configuration of the volume emboss generation unit 80 according to the third embodiment. Like the volume emboss generation unit 80 according to the second embodiment shown in Fig. 15, the volume emboss generation unit 80 according to the third embodiment also includes an outline identification unit 81, a distance identification unit 82, a depth value determination unit 83, and a level conversion unit 84.

The distance identification unit 82 according to the second embodiment searches for a point of contact with the outline of an object by using a search circle having a shape of a true circle. The distance identification unit 82 according to the third embodiment searches for a point of contact by using a search circle having a special form. A search circle having a special form may be an eccentric circle, an ellipse, etc. The distance identification unit 82 deforms the search circle in accordance with an externally defined parameter for deforming a circle. The parameter is exemplified by horizontal/vertical eccentricity, horizontal/vertical ovalization factor, angle of tilt of ellipse, etc.

The user uses the operation unit 60 to enter a value of at least one of the above plurality of parameters. The operation reception unit 40 delivers the input parameter value to the distance identification unit 82 of the volume emboss generation unit 80 (see Fig. 14).

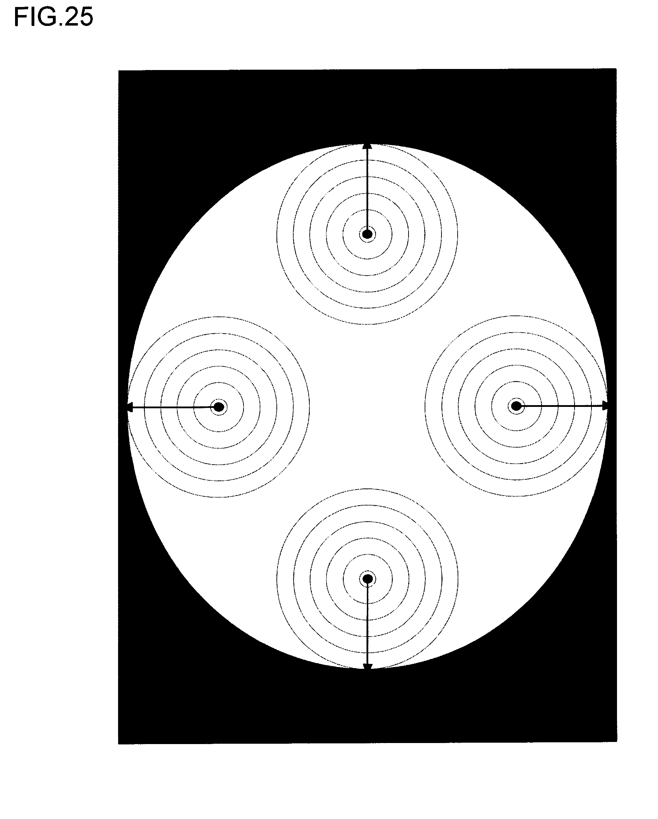

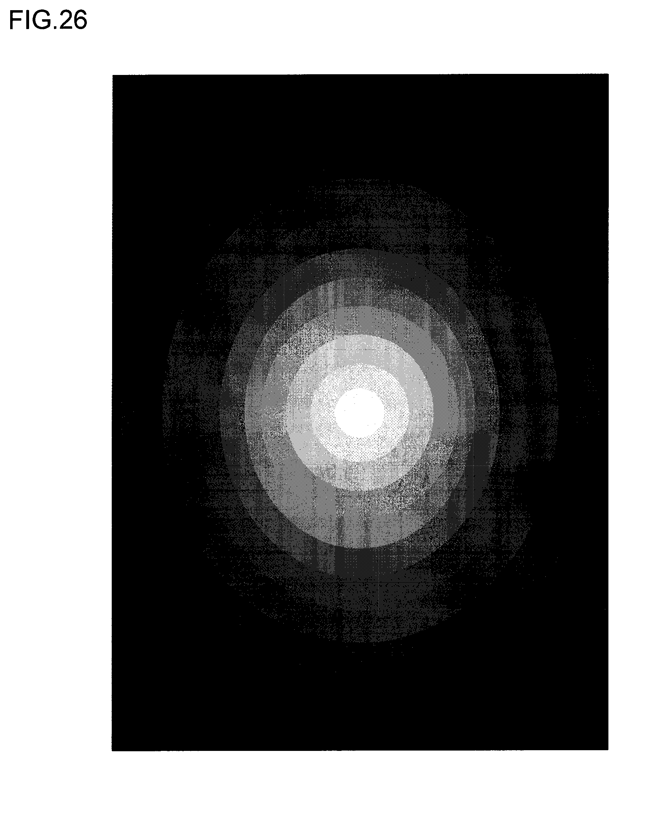

An example of using an eccentric search circle will be described first. Fig. 25 shows how a non-eccentric (true) search circle is used to search for an edge pixel of an object. Fig. 26 shows an emboss pattern from Fig. 25. Fig. 25 shows a white, rounded object. By using a non-eccentric search circle, an emboss pattern having the vertex at the center of the object is generated as shown in Fig. 26.

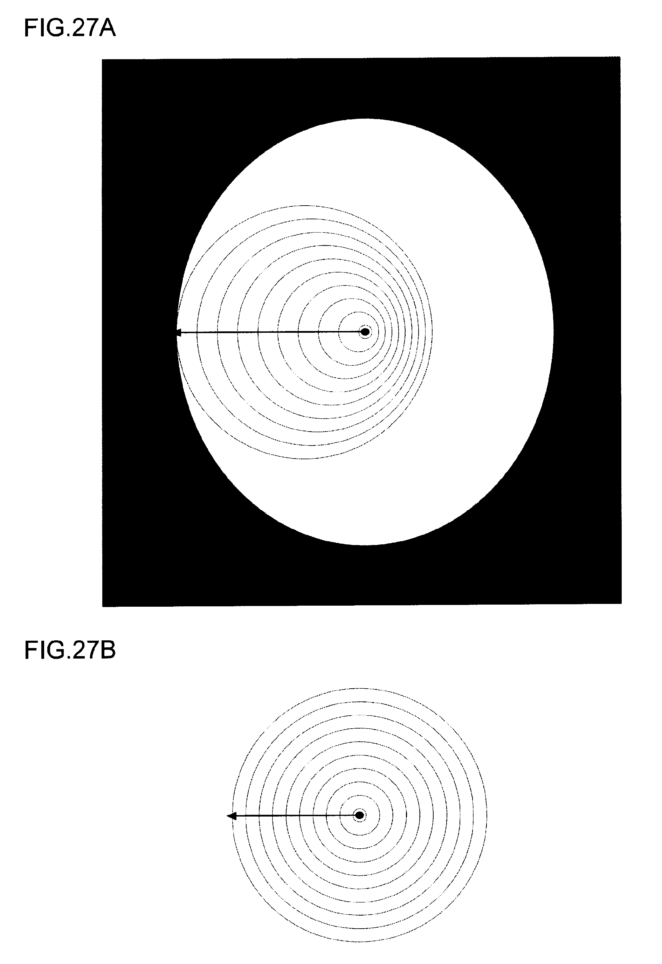

Figs. 27A-27B show how an eccentric search circle (true circle) is used to search for an edge pixel of an object. The search circles shown in Fig. 27A are generated based on a non-eccentric search circle by multiplying a coefficient determined by the angle formed by a line (arrow in Figs. 27A and 27B) connecting a point on the circumference of the circle and the center with respect to a predetermined axis (e.g., horizontal axis), by the current radius of the base circle. Given that the center remains unchanged, non-eccentric search circles and eccentric search circles are correlated to each other except that the magnitude of radius varies depending on the angle. In the example shown in Fig. 27, the radius is multiplied by the smallest coefficient when the arrow is oriented rightward. As the cycle proceeds so that the arrow is oriented upward (or downward) and then leftward, the coefficient is increased progressively. When the arrow is oriented leftward, the radius is multiplied the largest coefficient. It can also be said that the larger the radius of the eccentric search circle, the more displaced the center is in the predetermined direction. For example, in the example shown in Figs. 27A and 27B, a plurality of search circles are generated such that the larger the radius, the more displaced the center is toward left.

Eccentric search circles like those illustrated are used to search for an edge pixel. The distance between the base point and the identified pixel is determined as the radius of the non-eccentric search circle corresponding to the eccentric search circle. Fig. 27B shows non-eccentric search circles for determining the distance.

Since the radius is larger toward left than toward right, the edge toward the left of the base point is identified earlier than the edge toward right, even if the base point is located at the center of the object. The distance to the identified pixel is determined as the radius of a non-eccentric circle. Therefore, the distance to the identified edge is determined to be shorter than actually is.

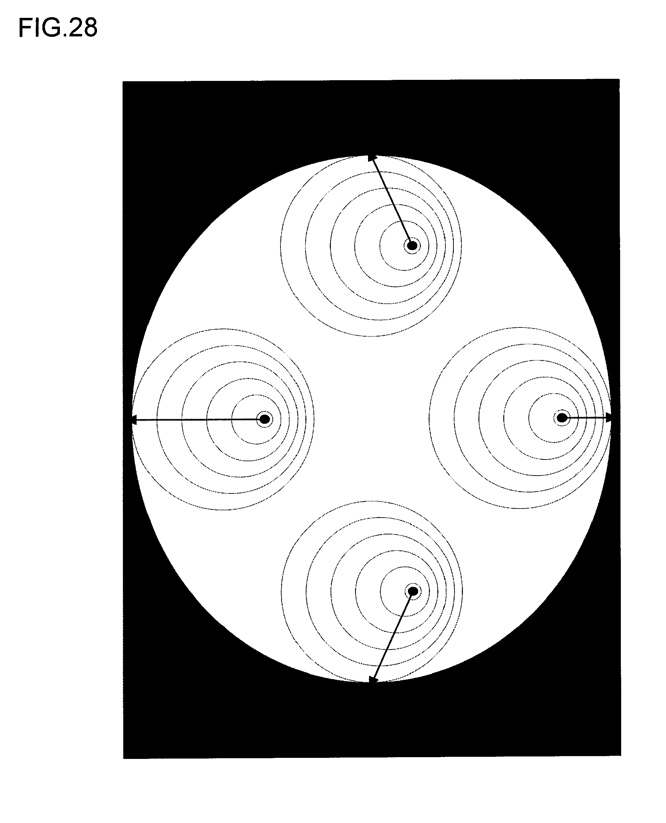

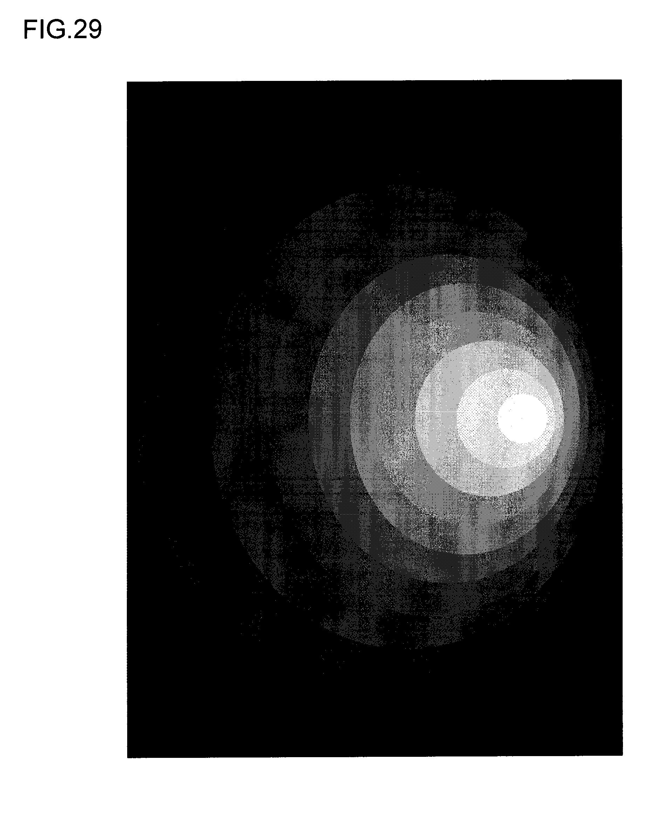

Fig. 28 shows how an eccentric search circle (true circle) is used to search for an edge pixel of an object. Fig. 29 shows an emboss pattern from Fig. 28. Fig. 28 shows how an edge pixel of the object of Fig. 26 is searched for by using eccentric circles. In this case, the closer a pixel to the left edge of the object, the closer the distance to the edge is determined to be than a pixel closer to the right edge of the object.

As a result, the portion near the left edge of the object is populated by pixels determined to be close to the edge, and the portion near the right edge of the object is populated by pixels determined to be far from the edge. Since the height of an emboss pattern generated is in accordance with the distance of a pixel to the edge, an emboss pattern in which the vertex is not at the center of the object but shifted right is generated as shown in Fig. 29.

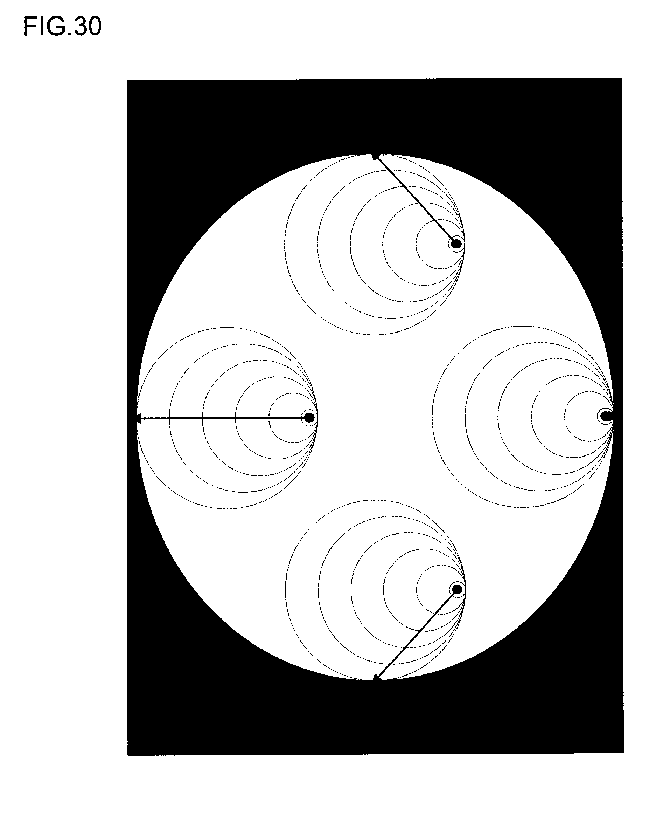

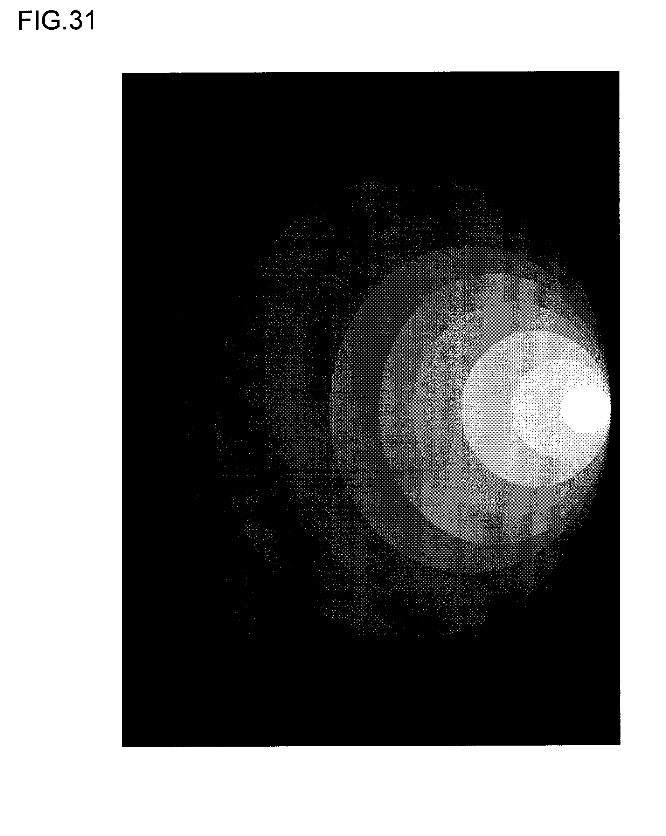

Fig. 30 shows how an eccentric search circle (true circle) with larger eccentricity than that of Fig. 28 is used to search for an edge pixel of an object. Fig. 31 shows an emboss pattern from Fig. 30. The search circles of Fig. 30 are extremely eccentric as compared with the search circles of Fig. 28. The search circles of Fig. 30 have a radius leftward but do not have a radius rightward. The radius toward right is always zero. In this case, when the base point is located interior to the edge of the object, search for an edge to the left of the base point is attempted but search for an edge to the right is not attempted. Search for an edge to the right of the base point is attempted only when the base point is located at the right edge of the object.

As a result, substantially the entirety of the area inside the object is populated by pixels having distance information based on the distance to the left edge, which is far. As shown in Fig. 31, the vertex of the emboss pattern generated will be located at the right edge of the object.

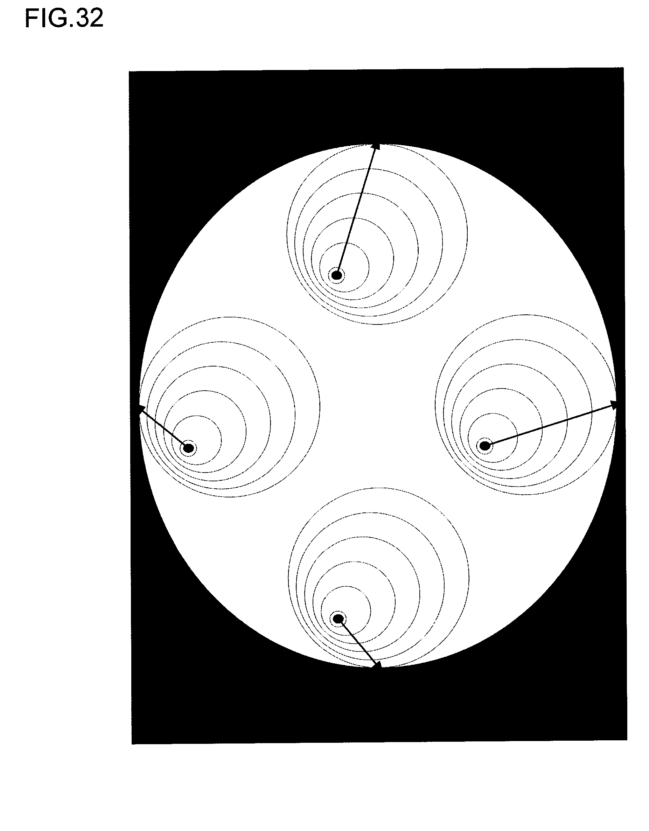

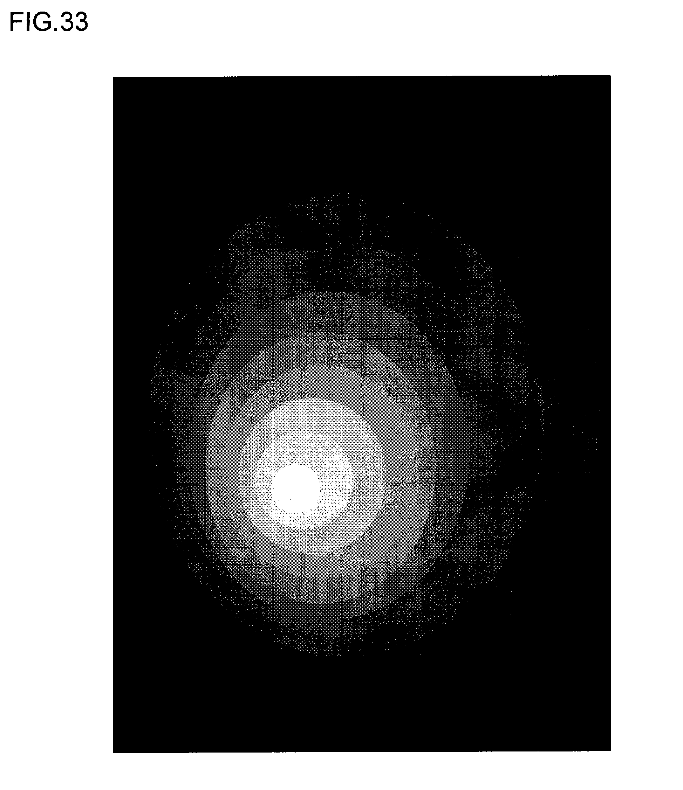

Figs. 32 shows how a search circle (true circle) eccentric toward bottom left is used to search for an edge pixel of an object. Fig. 33 shows an emboss pattern from Fig. 32. In this case, an emboss pattern in which the vertex is not at the center of the object but shifted bottom left is generated.

By searching for an edge pixel using an eccentric search circle, an emboss pattern having the vertex at a desired part can be easily generated. This does not require introduction of a special graphical user interface for letting the user designate a vertex and of a complicated process of letting the user designate the vertex. A simple user interface for designating in what direction and in what degree the vertex should be shifted inside the object form can be used, and a simple user operation suffices. Accordingly, the load on the user is reduced.

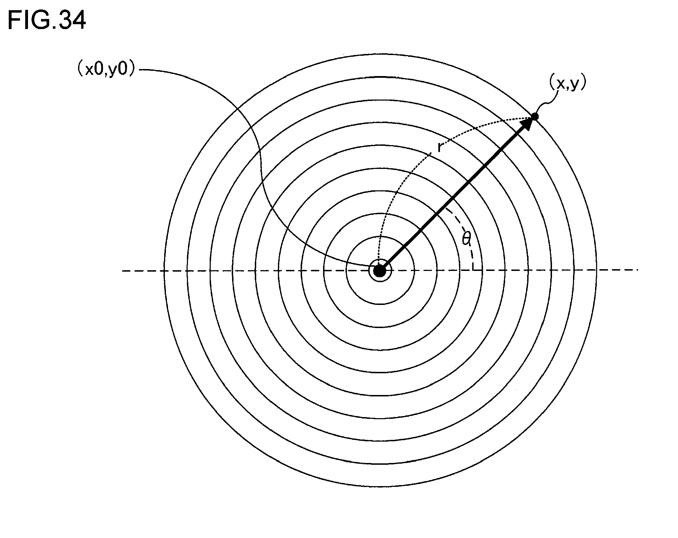

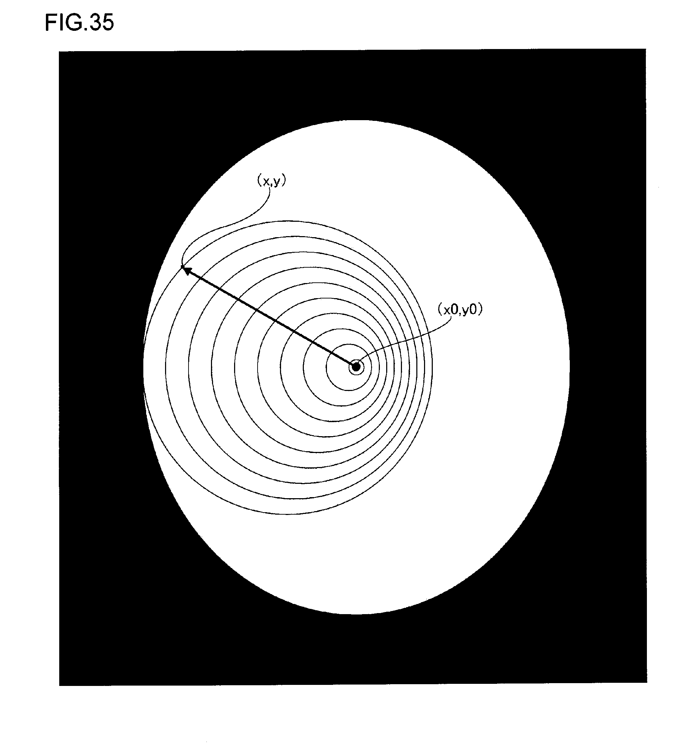

A description will now be given of an exemplary method of producing an eccentric search circle with reference to Figs. 34 and 35. Given that the coordinates of a pixel from which an edge is searched for are denoted by (x0,y0), the position (x,y) on a search circle before being made eccentric drawn around the coordinates as shown in Fig. 34 is given by the following expression (10).

$$x = r*\cos(\theta*\pi/180)+x0$$

$$y = r*\sin(\theta*\pi/180)+y0 \quad ...(10)$$

$$r: \text{ radius, } \theta: \text{ angle (degree)}$$

In contrast, the position on an eccentric search circle as shown in Fig. 35 according to the third embodiment is given by the following expression (11).

$$x = r*\cos(\theta*\pi/180)+x0+Sx$$

$$y = r*\sin(\theta*\pi/180)+y0+Sy$$

$$Sx = r*Px$$

$$Sy = r*Py$$

$$Px=Dx*\cos(Dy \theta Dx)$$

$$Py=Dy*\sin(Dy \theta Dy)$$

$$Dx \theta Dy=\tan-1(Dx/Dy) \quad ...(11)$$

r: radius, θ: angle (degree)
Dx: horizontal eccentricity (-1<Dx<+1)
Dy: vertical eccentricity (-1<Dy<+1)

The user can make a search circle eccentric as desired by entering horizontal and/or vertical eccentricity in the operation unit 60.

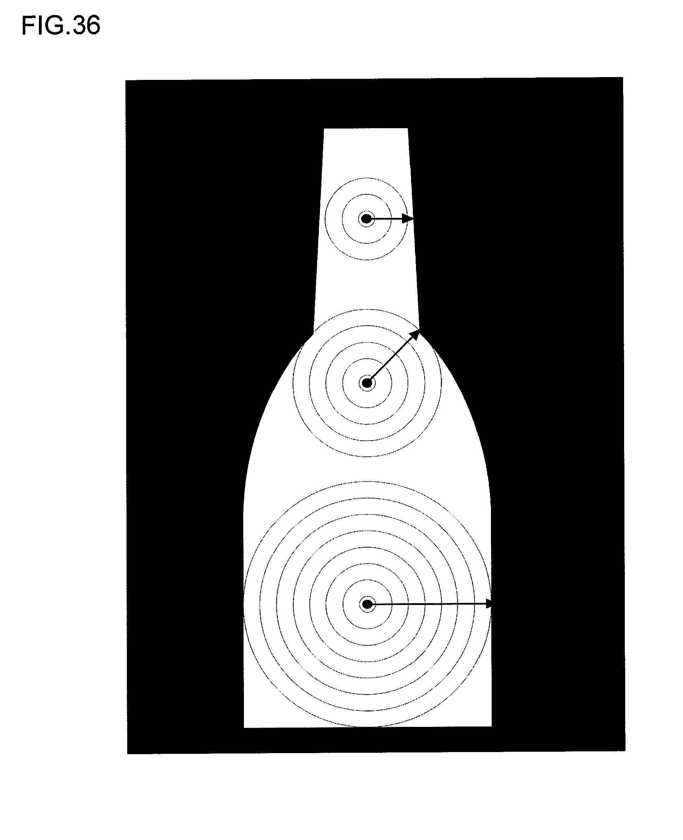

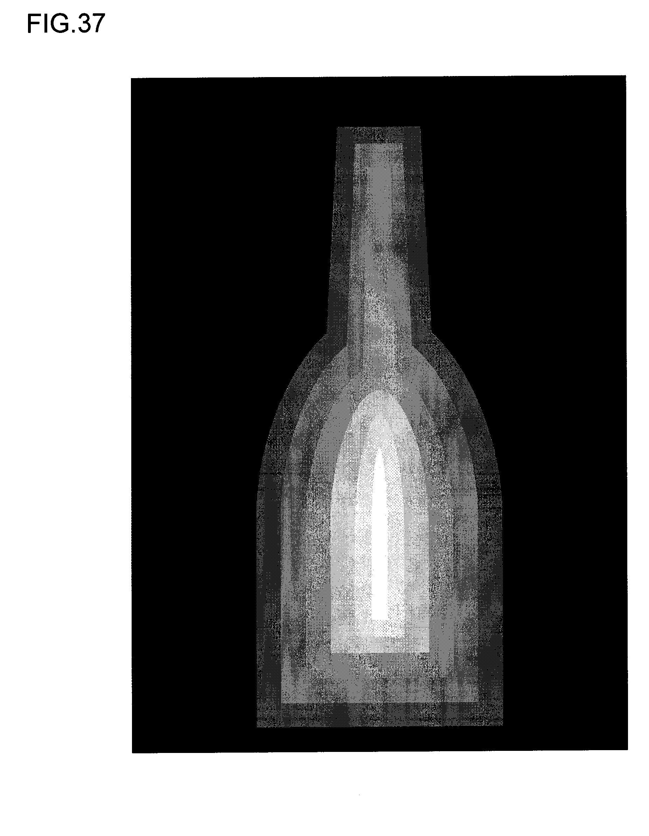

An example of using an ellipse for a search will be described. Fig. 36 shows how a true search circle is used to search for an edge pixel of an object. Fig. 37 shows an emboss pattern from Fig. 36. Fig. 36 shows a bottle object. As shown in Fig. 37, an emboss pattern evenly graded in all directions is generated.

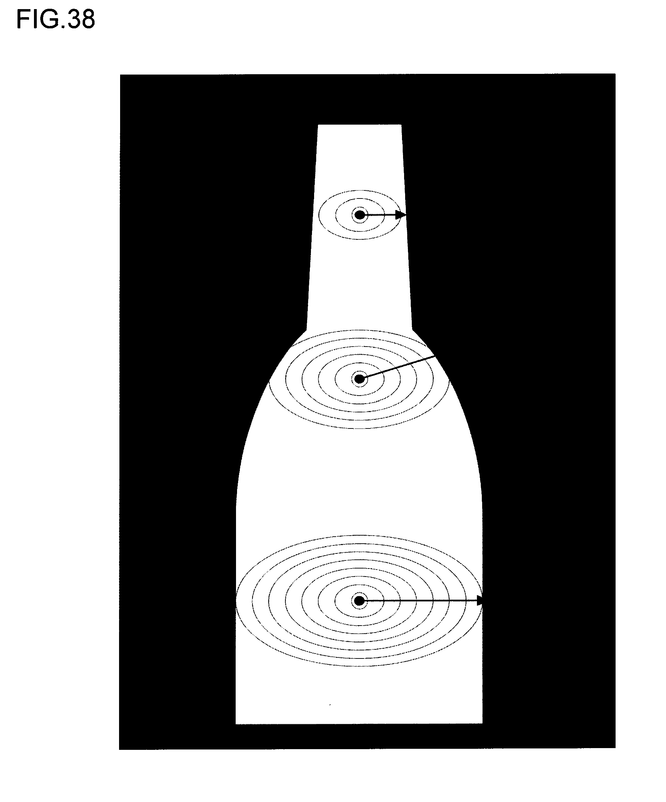

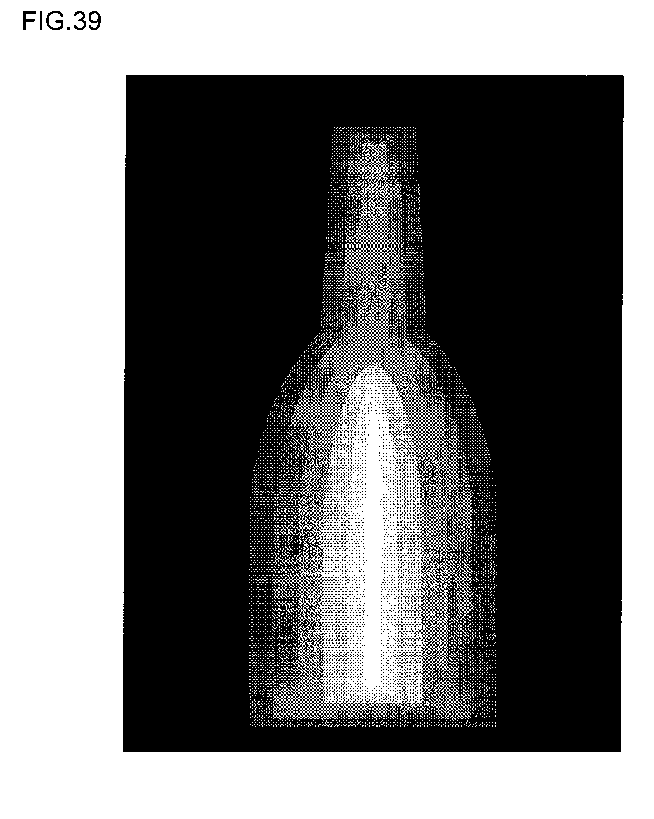

Fig. 38 shows how an elliptical search circle is used to search for an edge pixel of an object. Fig. 39 shows an emboss pattern from Fig. 38. The search circles shown in Fig. 38 are generated based on a non-eccentric true circle by multiplying a coefficient determined by an angle defined around the center by the current radius of the base true circle. True circles and elliptical circles are correlated to each other except that the magnitude of radius varies depending on the angle. Elliptical search circles like those illustrated are used to search for an edge pixel. As in the case of eccentric circles described above, the distance between the base point and the identified pixel is determined as the radius of the true circle corresponding to the ellipse.

Since the radius is larger horizontally than vertically in Fig. 38, the edge located horizontally with respect to the base point is identified earlier than the vertical edge. The distance to the identified pixel is determined as the radius of a true circle. Therefore, the distance to the identified edge is determined to be shorter than actually is. As a result, the distance from each pixel inside the object to the edge is determined to be shorter than actually is horizontally and larger than actually is vertically.

As shown in Fig. 39, the height of an emboss pattern generated is in accordance with the distance of a pixel to the edge. As a result, an emboss pattern graded gently in the horizontal direction and steeply in the vertical direction is generated.

Hypothesizing, instead of using an elliptical search circle compressed horizontally, that the original object is deformed so as to be extended vertically before generating an emboss pattern according to a search method using a true circle, and that the emboss object is subsequently compressed vertically to return its original proportion, it can easily be imagined that the same pattern as shown in Fig. 39 would be obtained as a result. This demonstrates that the above method is justified.

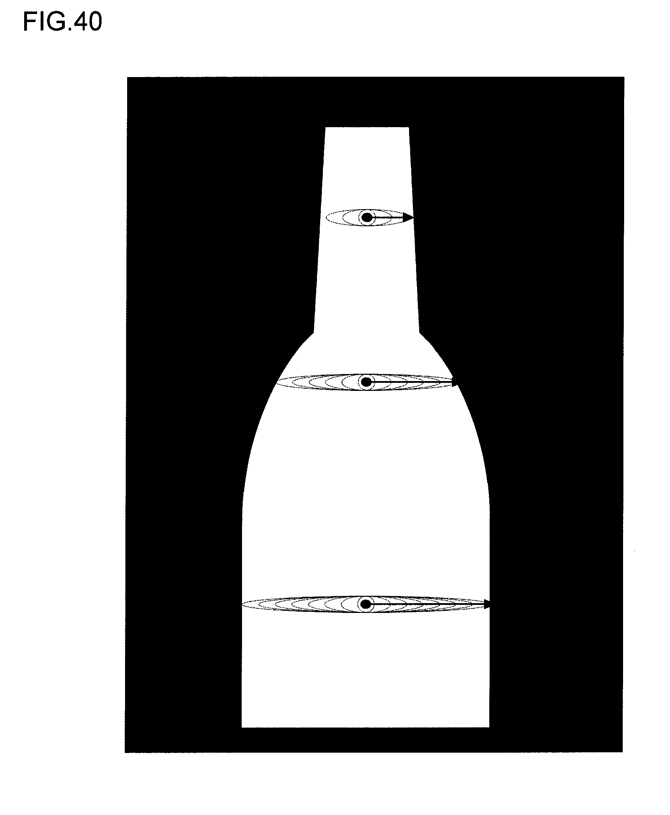

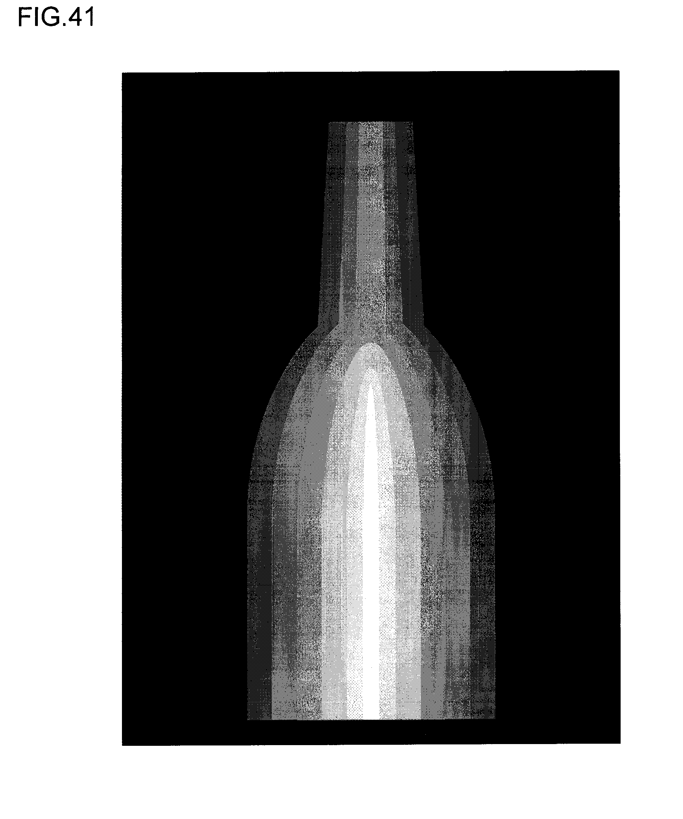

Fig. 40 shows how a search circle with a larger ovalization factor than that of Fig. 38 is used to search for an edge pixel of an object. Fig. 41 shows an emboss pattern from Fig. 40. The search circles of Fig. 40 are versions of the search circles of Fig. 38 with extreme ovalization factors. In this case, an emboss pattern graded in the horizontal direction but hardly graded in the vertical direction is generated. Since a bottle is a body of revolution, the resultant emboss pattern is more ideal.

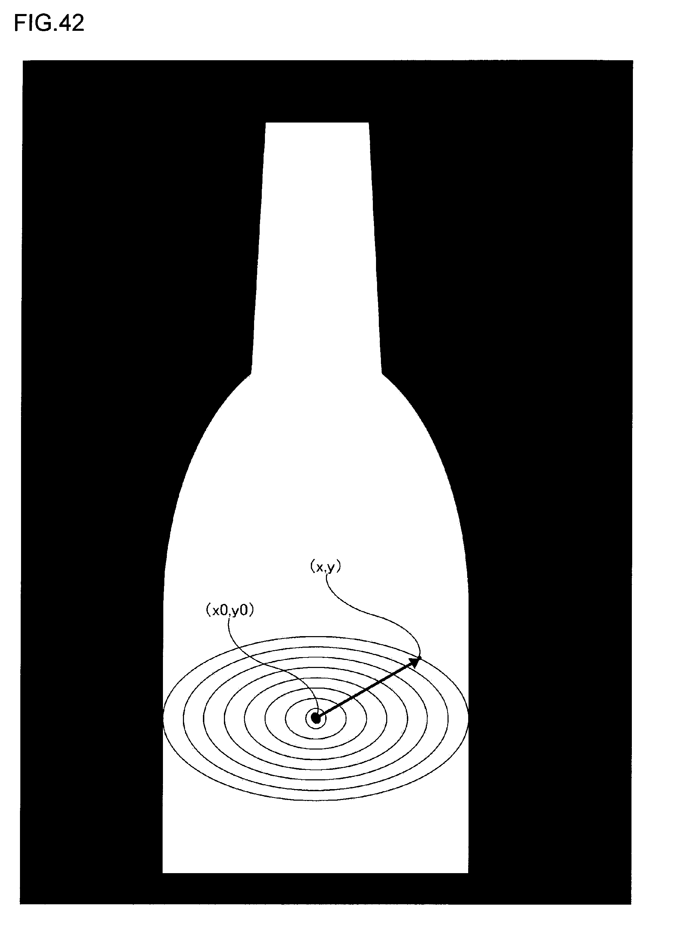

A description will now be given of an exemplary method of ovalizing a search circle with reference to Figs. 34 and 42. Given that the coordinates of a pixel from which an edge is searched for are denoted by (x0,y0), the position (x,y) on a pre-ovalization true search circle drawn around the coordinates as shown in Fig. 34 is given by the following expression (12).

$$x=r*\cos(\theta*\pi/180)+x0$$

$$y=r*\sin(\theta*\pi/180)+y0 \ ...(12)$$

$$r: \ \text{radius, } \theta: \ \text{angle (degree)}$$

In contrast, the position on an elliptical search circle as shown in Fig. 42 according to the third embodiment is given by the following expression (13).

$$x=Rx*r*\cos(\theta*\pi/180)+x0$$

$$y=Ry*r*\sin(\theta*\pi/180)+y0 \ ...(13)$$

r: radius, θ: angle (degree)
Rx: horizontal ovalization factor (0<Rx<+1)
Ry: vertical ovalization factor (0<Ry<+1)

The user can make a search circle elliptical as desired by entering a horizontal and/or vertical ovalization factor in the operation unit 60. By ovalizing a circle extremely so that the ovalization factor approaches 0, the elliptical search circle will substantially be a straight line.

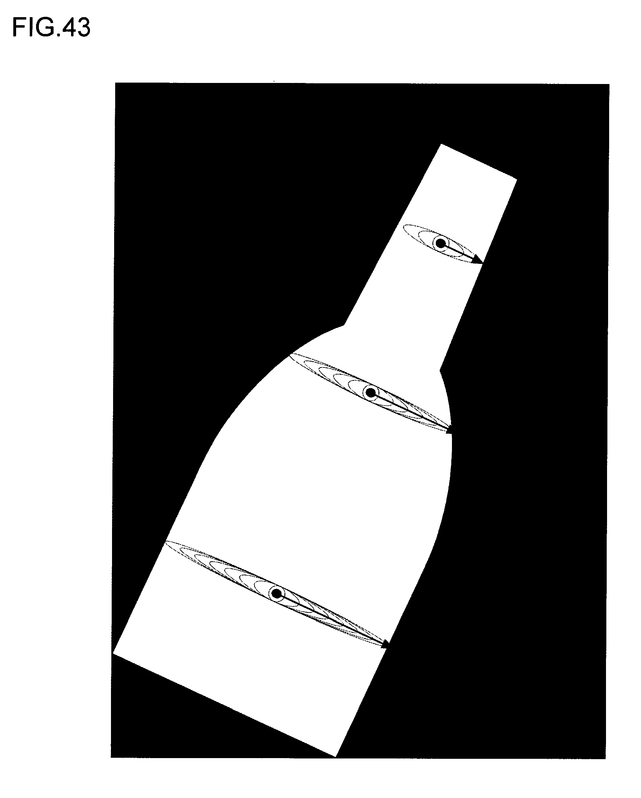

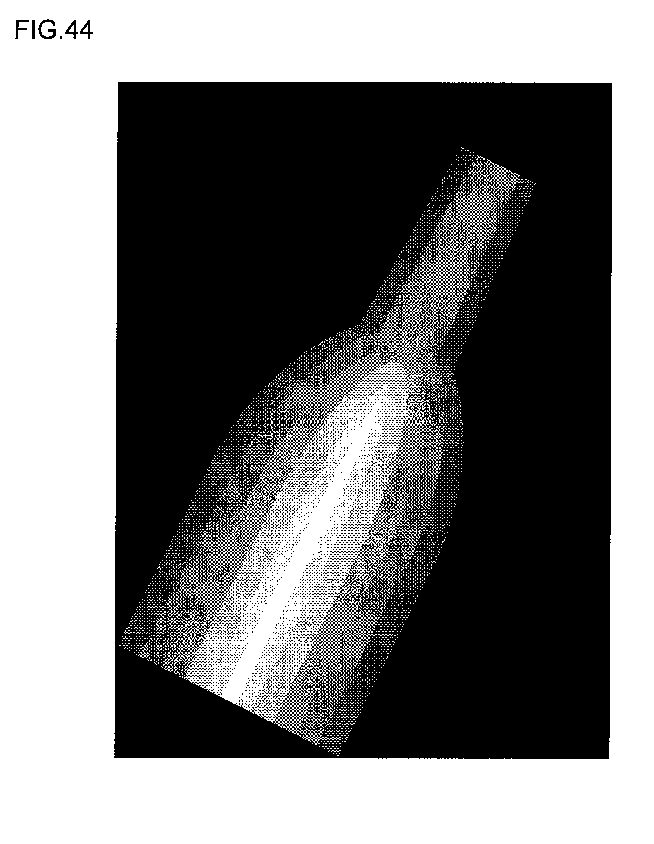

A description will be given of tilting an elliptical search circle. Fig. 43 shows search for an edge pixel of an object having a shape of a tilted bottle. Fig. 44 shows an emboss pattern from Fig. 43. Fig. 43 shows that the axis of revolution of the bottle is at an angle instead of being perpendicular. Search conducted in this bottle object using a vertically compressed ellipse does not generate an accurate emboss pattern. Therefore, the axis of revolution of the ellipse is tilted to match the axis of revolution of the object. An accurate emboss pattern is generated as shown in Fig. 44 by using an ellipse with the axis of revolution tilted like the object.

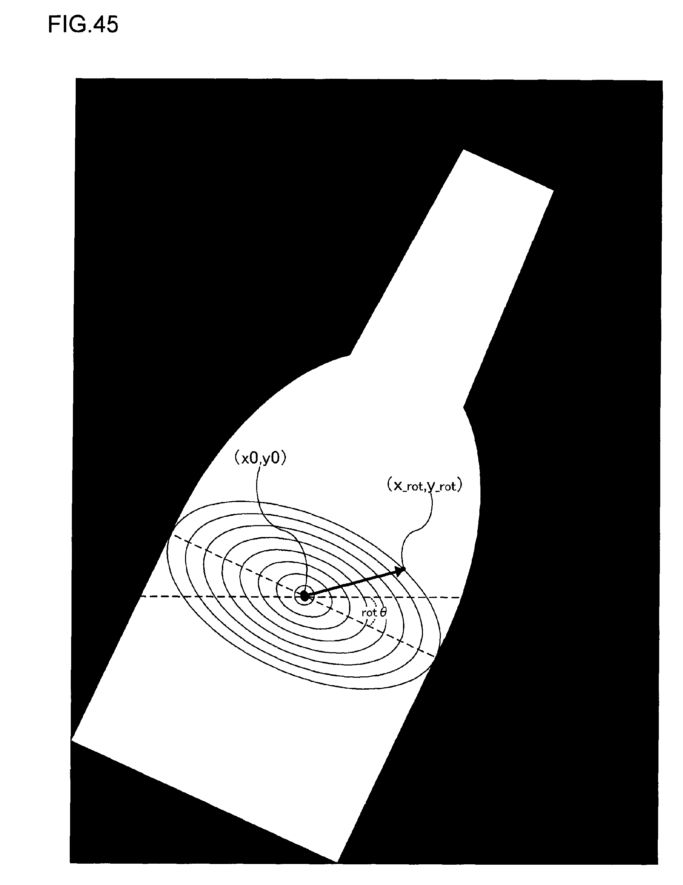

A description will be given, with reference to Fig. 45, of an exemplary method of generating an elliptical search circle having a tilted axis. Given that the coordinates of an elliptical search circle having a non-tilted axis and drawn around the coordinates (x0,y0) of a pixel from which an edge is searched for are denoted by (x,y), the position (x_rot, y_rot)) of an elliptical search circle as shown in Fig. 45 having a tilted axis is given by the following expression (14).

$$x1=x-x0$$

$$y1=y- \ y0$$

$$x2=\cos(\text{rot}\theta)*x1-\sin(\text{rot}\theta)*y1$$

$$y2=\sin(rot\theta)*x1+\cos(rot\theta)*y1$$

$$x\_rot = x2 + x0$$

$$y\_rot = y2 + y0 \quad ...(14)$$

rotθ: tilt angle of search circle
(x1,y1): offset coordinates with reference to (xo,y0) of the search circle before the coordinate axis is tilted
(x2,y2): offset coordinates with reference to (xo,y0) of the search circle after the coordinate axis is tilted

The user can tilt a search circle as desired by entering an angle of tilt and offset coordinates in the operation unit 60.

According to the third embodiment as described above, a volume emboss that should be applied to a depth map in a manner conforming to an object form is generated by automatically generating an emboss pattern centered at a position shifted by an amount designated by a user with a simple user operation. Accordingly, a 3D image with a perspective that matches the actual image can be easily generated. This does not require introduction of a special graphical user interface and of a complicated process of letting the user designate the vertex. Also, an emboss that matches the perspective inherent to the object can be generated even in the case of an object having a shape of a body of revolution. By performing 3D conversion using an embossed depth map such as this, a 3D image with improved stereoscopic appearance in which the volume of the object as a whole is perceived can be generated.

Described above is an explanation based on an exemplary embodiment. The embodiment is intended to be illustrative only and it will be obvious to those skilled in the art that various modifications to constituting elements and processes could be developed and that such modifications are also within the scope of the present invention.

According to the third embodiment, an emboss that matches the actual image is generated by deforming a search circle. In a variation to the third embodiment, the same advantage is obtained by deforming an object. In the variation to the third embodiment, the distance identification unit 82 of Fig. 24 deforms an object in accordance with an externally denied parameter. The parameter is exemplified by a factor of horizontal/vertical extension of an object, an angle of rotation of an object, etc. A description will now be given by way of a specific example.

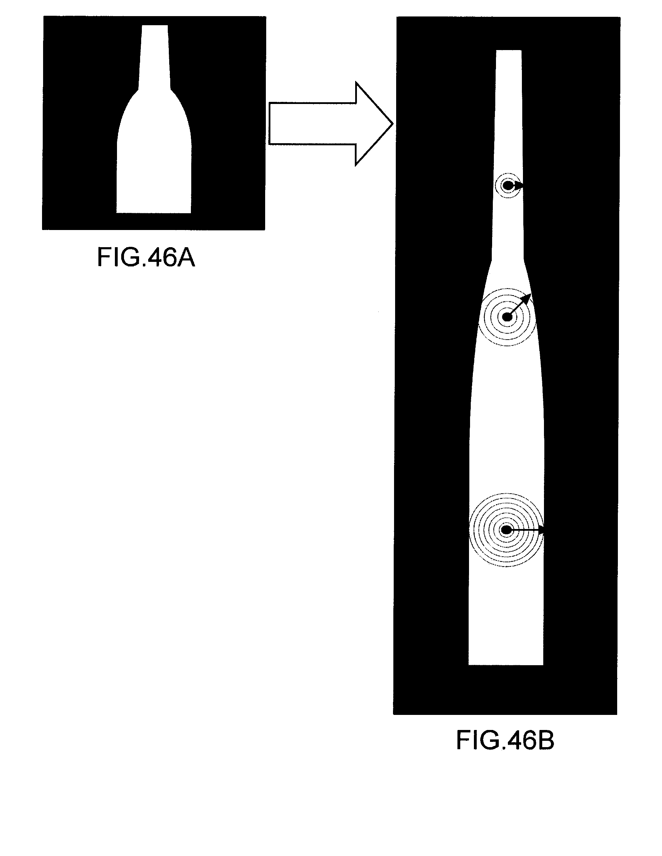

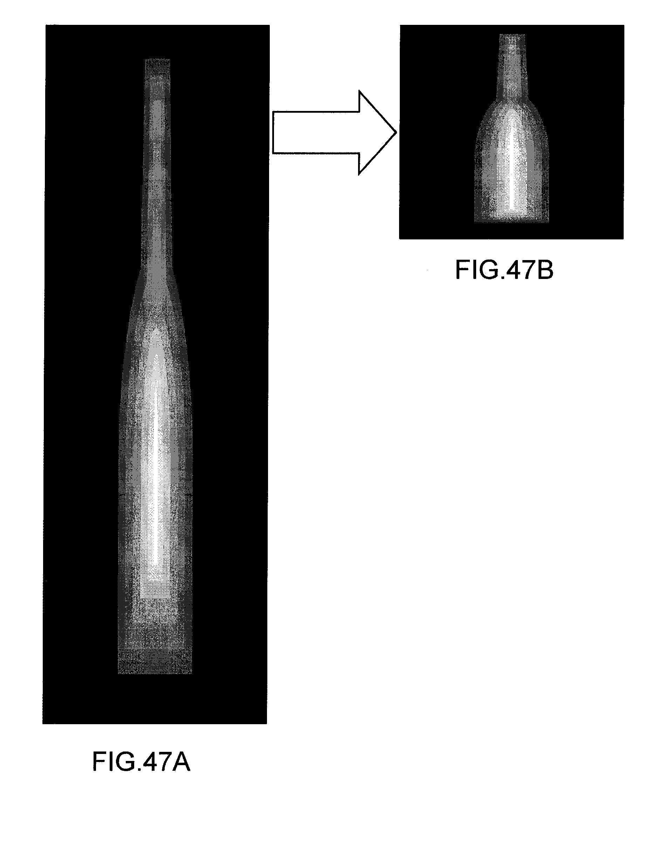

Figs. 46A-46B show how an edge pixel of an object is searched for by using a true search circle. Figs. 47A-47B show an emboss pattern from Figs. 46A-46B. The object of Fig. 46A is a bottle as in Figs. 36, 38, and 40. Fig. 46A shows an original image. The image is assumed to be used as a mask. In Figs. 38 and 40, vertically compressed elliptical search circles are used. In this variation, the object is extended instead of compressing search circles. Fig. 46B shows a mask derived from vertically extending the original mask of Fig. 46A. True circles instead of ellipses are used as search circles.

Fig. 47B shows an emboss pattern from Fig. 46B. Finally, the generated emboss pattern is compressed to the original object size. Fig. 47B shows an emboss pattern returned to the mask size of Fig. 46A. The emboss pattern is equivalent to the emboss pattern of Fig. 39 generated by using elliptical search circles.

The user can extend an object as desired by entering a factor of horizontal and/or vertical extension of the object in the operation unit 60.

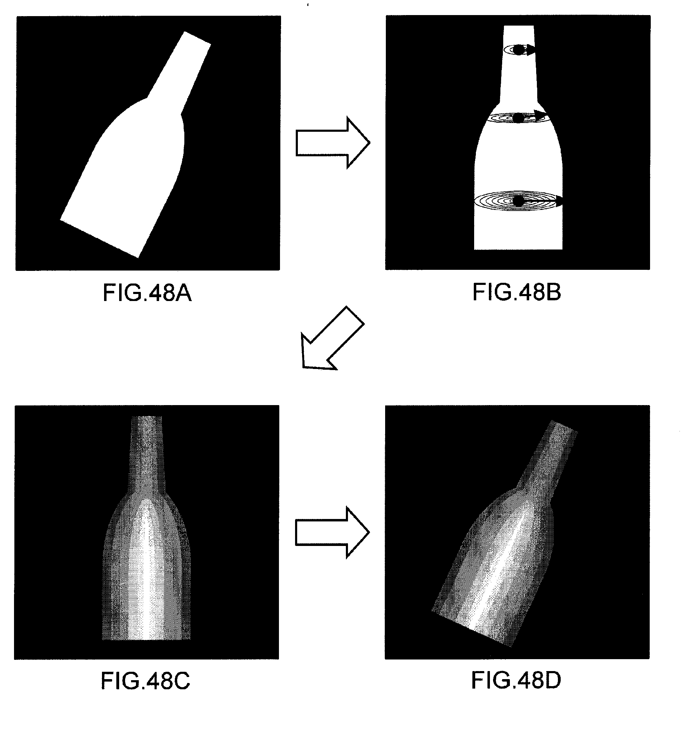

Figs. 48A-48D show how an edge pixel of an object having a shape of a tilted bottle is searched for. The object of Fig. 48A is a tilted bottle like that of Fig. 43. Fig. 48A shows an original image. The image is assumed to be used as a mask. In Fig. 43, elliptical search circles rotated in accordance with the tilt of the bottle are used. In this variation, the object is rotated instead of rotating ellipses. Referring to Fig. 48B, the original mask of Fig. 48a is rotated left by a certain angle, deforming the bottle into a vertical mask. Non-tilted ellipses are used as search circles.

Fig. 48C shows an emboss pattern from Fig. 48B. Finally, the generated emboss pattern is rotated backward to resume the tilt of the original object. Fig. 48D shows an emboss pattern returned to the tilt of the mask of Fig. 48A. The emboss pattern is equivalent to the emboss pattern of Fig. 44 generated by using tilted elliptical search circles.

The user can deform an ellipse as desired and rotate the object by entering a horizontal and/or vertical ovalization factor and an angle of tilt of the object in the operation unit 60.

Thus, deformation of an object in place of deformation of a search circle or deformation of both a search circle and an object can also achieve the same advantage as achieved by deformation of a search circle only.

The invention is not limited to the embodiments described above and can be modified in a variety of manners without departing from the scope of the invention.

For example, embodiments may be combined. Alternatively, some components of the depth estimation device or the image processing device may be implemented separately so that the function of the depth estimation device or the image processing device may be implemented through communication with the separate component via a network.

The present invention encompasses a program for implementing the functions in a computer. The program may be read from a recording medium and imported to the computer or delivered over a communication network and imported to the computer.

## Claims

1. A depth estimation device (80) comprising:

   an outline identification unit (81) configured to identify an outline of an object in a target image;
   a distance identification unit (82) configured to identify a distance between a target pixel in an object region and the outline; and
   a depth value determination unit (83) configured to determine a depth value of the target pixel in accordance with the distance.

2. The depth estimation device (80) according to claim 1,
   wherein the distance identification unit (82) determines the minimum distance between the target pixel in the object region and the outline, and
   wherein the depth value determination unit (83) determines a depth value of the target pixel in accordance with the minimum distance.

3. The depth estimation device (80) according to claim 1 or 2,
   wherein the distance identification unit (82) searches for a point of contact with the outline by using search circles concentrically spaced apart from each other around a position of the target pixel.

4. The depth estimation device (80) according to claim 3,
   wherein the distance identification unit (82) is configured to deform the search circles in accordance with an externally defined parameter.

5. The depth estimation device (80) according to claim 4,
   wherein the parameter includes at least one of eccentricity, ovalization factor, and angle of tilt of an ellipse resulting from ovalization.

6. The depth estimation device (80) according to claim 3,
   wherein the distance identification unit (82) is configured to deform the object in accordance with an externally defined parameter.

7. The depth estimation device (80) according to claims 1-6, further comprising:

   a level conversion unit (84) configured to subject an emboss pattern based on a depth map of the object determined by the depth value determination unit (83) to level conversion, by using a mapping function or a numerical conversion table.

8. An image processing device (100) comprising:

   a depth map generation unit (10) configured to refer to an input (2D) image and a depth model so as to generate a depth map of the input (2D) image;
   a volume emboss generation unit (80) configured to generate an emboss pattern of an object in the input (2D) image;
   a depth map processing unit (20) configured to process a region located in the depth map generated by the depth map generation unit (10) and corresponding to the object; and
   an image generation unit (30) configured to generate an image **characterized by** a different viewpoint, based on the input (2D) image and the depth map processed by the depth map processing unit (20),
   wherein the volume emboss generation unit (80) comprises:

an outline identification unit (81) configured to identify an outline of the object;
a distance identification unit (82) configured to identify a distance between a target pixel in the object and the outline; and
a depth value determination unit (83) configured to determine a depth value of the target pixel in accordance with the distance,
wherein the volume emboss generation unit (80) generates the emboss pattern based on the depth value determined by the depth value determination unit (83), and
wherein the depth map processing unit (20) adds an emboss to the region in the depth map corresponding to the object, by using the emboss pattern.

9. A depth estimation method comprising:

identifying an outline of an object in a target image;
identifying a distance between a target pixel in an object region and the outline; and
determining a depth value of the target pixel in accordance with the distance.

10. An image processing method comprising:

referring to an input (2D) image and a depth model so as to generate a depth map of the input (2D) image;
generating an emboss pattern of an object in the input (2D) image;
processing a region located in the generated depth map and corresponding to the object; and
generating an image **characterized by** a different viewpoint, based on the input (2D) image and the processed depth map,
wherein the generation of an emboss pattern comprises:

identifying an outline of the object;
identifying a distance between a target pixel in the object and the outline; and
determining a depth value of the target pixel in accordance with the distance,
wherein the generation of an emboss pattern generates the emboss pattern based on the depth value as determined, and
wherein the processing of the depth map comprises adding an emboss to the region in the depth map corresponding to the object, by using the emboss pattern.

11. A depth estimation program comprising:

an outline identification module configured to identify an outline of an object in a target image;
a distance determination module configured to determine a distance between a target pixel in the object and the outline; and
a depth value determination module configured to determine a depth value of the target pixel in accordance with the distance.

12. An image processing program comprising:

a depth map generation module configured to refer to an input (2D) image and a depth model so as to generate a depth map of the input (2D) image;
an emboss pattern generation module configured to generate an emboss pattern of an object in the input (2D) image;
a depth map processing module configured to process a region located in the generated depth map and corresponding to the object; and
an image generation module configured to generate an image **characterized by** a different viewpoint, based on the input (2D) image and the processed depth map,
wherein the emboss pattern generation module comprises:

an outline identification module configured to identify an outline of the object;
a distance identification module configured to identify a distance between a target pixel in the object and the outline; and
a depth value determination module configured to determine a depth value of the target pixel in accordance with the distance,

21

wherein the emboss pattern generation module generates the emboss pattern based on the depth value as determined, and

wherein the depth map processing module comprises adding an emboss to the region in the depth map corresponding to the object, by using the emboss pattern.

FIG.1

2D INPUT IMAGE

GENERATE
DEPTH MAP

S10

DEPTH MAP

GENERATE
3D IMAGE

S30

3D OUTPUT IMAGE (R)

3D OUTPUT IMAGE (L)

FIG.2

100

MASK ─────────────────────────────────────────────── IMAGE PROCESSING DEVICE

┌─ 10 ──────────┐    ┌─ 20 ──────────┐    ┌─ 30 ──────────┐
2D IMAGE ──│ DEPTH MAP     │──→│ DEPTH MAP     │──→│ 3D IMAGE      │── 3D IMAGE
           │GENERATION UNIT│   │PROCESSING UNIT│   │GENERATION UNIT│──→
           └───────────────┘   └───────────────┘   └───────────────┘

┌─ 40 ──────────┐    ┌─ 50 ──────────┐
│ OPERATION     │──→│ DISPLAY       │
│RECEPTION UNIT │   │CONTROL UNIT   │
└───────────────┘   └───────────────┘

200

┌─ 60 ──────────┐    ┌─ 70 ──────────┐
│ OPERATION UNIT│   │ DISPLAY UNIT  │
└───────────────┘   └───────────────┘

CONSOLE TERMINAL DEVICE

500

24

FIG.3

R SIGNAL

2D IMAGE

11
UPPER-SCREEN-PART HIGH-FREQUENCY COMPONENT EVALUATION SECTION

12
LOWER-SCREEN-PART HIGH-FREQUENCY COMPONENT EVALUATION SECTION

13
COMBINATION RATIO SETTING SECTION

17
COMBINING SECTION

18
ADDING SECTION

DEPTH MAP

14
FIRST BASIC DEPTH MODEL FRAME MEMORY

15
SECOND BASIC DEPTH MODEL FRAME MEMORY

16
THIRD BASIC DEPTH MODEL FRAME MEMORY

10

# FIG.4

EP 2 704 097 A2

FIG.5

FIG.6

S22

MASK OF LAYER 1 (PERSON)

MASK OF LAYER 2 (TREE)

MASK OF LAYER 3 (BACKGROUND)

DEPTH MAP OF LAYER 1 (PERSON)

DEPTH MAP OF LAYER 2 (TREE)

DEPTH MAP OF LAYER 3 (BACKGROUND)

COMBINE LAYER MAPS OF LAYERS

COMBINED LAYER DEPTH MAP

EP 2 704 097 A2

EP 2 704 097 A2

# FIG.7

PRE-PROCESSING
DEPTH MAP

S21a

DEPTH MAP PROCESSING
(GAIN MULTIPLICATION)

PROCESSED DEPTH MAP

b

# FIG.8

2D INPUT IMAGE

DEPTH MAP

S30

GENERATE
3D IMAGE

PRE-CORRECTION
PIXEL-SHIFTED IMAGE

c

CORRECTED PIXEL-
SHIFTED IMAGE

d

EP 2 704 097 A2

# FIG.9

EP 2 704 097 A2

MASK OF TREE

PRE-PROCESSING
DEPTH MAP

DEPTH MAP PROCESSING
(OFFSET ADDITION)

S21b

PROCESSED DEPTH MAP

g

# FIG.10

EP 2 704 097 A2

PRE-PROCESSING
DEPTH MAP

S21b

DEPTH MAP PROCESSING
(OFFSET ADDITION)

PROCESSED DEPTH MAP

h

FIG.11A

DEPTH VALUE

FIG.11B

DEPTH VALUE

FIG.11C

DEPTH VALUE

FIG.12

MASK OF BACKGROUND

PRE-PROCESSING DEPTH MAP → DEPTH MAP PROCESSING (GRADATION PROVISION) S21c → PROCESSED DEPTH MAP

m

GRADATION PATTERN

EP 2 704 097 A2

FIG.13

FIG.14

MASK

2D IMAGE

100
IMAGE PROCESSING DEVICE

10
DEPTH MAP
GENERATION UNIT

20
DEPTH MAP
PROCESSING UNIT

30
3D IMAGE
GENERATION UNIT

3D IMAGE

80
VOLUME EMBOSS
GENERATION UNIT

40
OPERATION
RECEPTION UNIT

50
DISPLAY
CONTROL UNIT

200

60
OPERATION UNIT

70
DISPLAY UNIT

CONSOLE TERMINAL DEVICE

500

36

# FIG.15

MASK PATTERN → [OUTLINE IDENTIFICATION UNIT (81)] → [DISTANCE IDENTIFICATION UNIT (82)] → [DEPTH VALUE DETERMINATION UNIT (83)] → [LEVEL CONVERSION UNIT (84)] → VOLUME EMBOSS

VOLUME EMBOSS GENERATION UNIT (DEPTH ESTIMATION DEVICE) 80

EP 2 704 097 A2

FIG.16A

FIG.16B

FIG.16C

FIG.17A

FIG.17B

FIG.18

FIG.19A

FIG.19B

FIG.19C

$$y = a * \tan^{-1}(b * x)$$

FIG.20A

FIG.20B

FIG.21A

FIG.21B

FIG.22A

FIG.22B

FIG.23A

FIG.23B

FIG.23C

EP 2 704 097 A2

FIG.24

PARAMETER FOR DEFORMING CIRCLE

80

MASK PATTERN

81
OUTLINE
IDENTIFICATION
UNIT

82
DISTANCE
IDENTIFICATION
UNIT

83
DEPTH VALUE
DETERMINATION
UNIT

84
LEVEL
CONVERSION
UNIT

VOLUME EMBOSS

VOLUME EMBOSS GENERATION UNIT (DEPTH ESTIMATION DEVICE)

FIG.25

FIG.26

FIG.27A

FIG.27B

FIG.28

FIG.29

FIG.30

FIG.31

FIG.32

FIG.33

FIG.34

FIG.35

FIG.36

FIG.37

FIG.38

FIG.39

FIG.40

FIG.41

FIG.42

FIG.43

FIG.44

FIG.45

FIG.46A

FIG.46B

FIG.47B

FIG.47A

FIG.48A

FIG.48B

FIG.48C

FIG.48D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009044722 A

- JP 2005151534 A